# EUROPEAN PATENT APPLICATION

(11) **EP 1 113 360 A2**
(43) Date of publication of application: **04.07.2001**
(21) Application number: 00125541.3
(22) Date of filing: 22.11.2000
(51) Int. Cl.: G06F 9/46

(54) **Mobile agent executing machine-dependent data processing**

(30) Priority: 26.11.1999 JP 33592199; 24.03.2000 JP 2000084348
(71) Applicant: MATSUSHITA ELECTRIC INDUSTRIAL CO., LTD., Kadoma-shi, Osaka 571-8501 (JP)
(72) Inventor: Miura, Koji, Matsubara-shi, Osaka 580-0016 (JP); Eto, Minoru, Yokohama-shi, Kanagawa 236-0053 (JP)
(74) Representative: Kügele, Bernhard

(57) **Abstract**

An information receiving section receives a message composed of contents data and a program code for processing this contents data, and separates the message into the contents data and the program code. A system information acquiring section acquires system information. A program code process section executes the separated program code depending on the acquired system information, and processes the contents data. An information transmitting section reorganizes the processed contents data and the program code, and transmits them to the network. As a result, dispersing of the load in contents data processing on the network and decreasing of communication delay are realized.

## Description

### FIELD OF THE INVENTION

The present invention relates to contents processing technology of mobile agent.

### BACKGROUND OF THE INVENTION

Recently, various service sites such as shopping mall using the world wide web (WWW) are introduced, and the number of users is expected to increase further. To lessen the load of the users of such network services, efforts of research and development are concentrated on the mobile agent which executes processing in place of the user in plural sites while moving on the network. The studies in this field are explained, for example, by Neeran M. Kamik and R. Tripathi in "Design Issues in Mobile-Agent Programming Systems" (IEEE Concurrency, July-September 1998).

The mobile agent is described as a program to be executed in the site on the network, and moves to the site on the network by way of the network, and executes the program.

Hitherto, regardless of the situation at the destination of move, the mobile agent moved on the network. In such method, if moving to a site of high load and executing the program, it takes a long processing time, and the response to the user is delayed.

Accordingly, a routing method for dynamic execution of the mobile agent has been proposed in Japanese Laid-open Patent No. 10-320361 (United States Patent Application No. 08/847079). In this method, the load information at the destination of move is acquired in advance, and if the load is high, a substitute site is retrieved so as to cope with load changes.

On the other hand, devices connected to the network are more and more diversified, including the personal computer (PC), personal digital assistant (PDA), cellular phone, and car navigation system. These network devices are varied in processing capacity, connection circuit speed, display screen size, and display colors. Therefore, looking up the same contents, the contents may not be displayed or only insufficiently displayed depending on the individual devices.

In the aspect of the communication speed, if only a low circuit speed is presented, it takes much time until all contents are displayed, and the telephone charge is very high.

The contents providers are attempting to increase the number of sites and distribute the load because sufficient service cannot be presented to the users when the load of the service site is high. However, when the site are increased, it is difficult to match the contents among the sites.

### SUMMARY OF THE INVENTION

The invention proposes information processing apparatus and information processing method, in which a program code as mobile agent for processing contents is added to the contents, when processing the contents depending on the network device used by the user, and the mobile agent processes the contents at the site on the way of transfer of the contents from the service site to the user's terminal, and a computer program product used in such information processing apparatus or information processing method.

The invention is intended to realize processing of contents depending on the system information, by acquiring the system information such as network communication speed of the site or CPU load, when the mobile agent moves between the service site and user's terminal together with the contents.

For example, when the network communication speed is slow or the CPU load is high, the invention is capable of decreasing the communication delay by reducing the size of the contents, or decimating or processing the contents information.

Also according to the invention, by executing contents processing at a site low in the CPU load, the load can be distributed, and the communication delay can be decreased.

Further, the invention is capable of acquiring the terminal information or preference information of the user through the network, in advance or when necessary, and putting this information into the contents information of the mobile agent, so that the contents may be processed depending on the processing capacity of the user's terminal, display screen size, display color, or preference of the user.

In addition, according to the invention, if contents processing cannot be completed at one site due to CPU load, processing capacity or other requirements, the intermediate processing result may be contained in the contents information of the mobile agent, so that processing can be restarted at other site, and the load can be reduced by distribution of job.

The conventional method (Japanese Laid-open Patent No. 10-320361) is effective in the environment in which the component to be executed (program code) is fixed at each site, but it is not effective if all sites having the program code are not usable.

In the invention, therefore, the site for executing the program is not fixed, but a program code is added to the contents data, and the processing is executed at a site lower in the load in the process of moving, thereby solving the conventional problems. That is, the flexibility of processing is enhanced by utilizing the network itself as the processing system.

### BRIEF DESCRIPTION OF THE DRAWINGS

Fig. 1 is a system configuration diagram of a contents data processing apparatus in a first embodiment of the invention.

Fig. 2 is its hardware configuration diagram.

Fig. 3 is a flowchart showing its operation.

Fig. 4 is a system configuration diagram of a still image processing apparatus in a second embodiment of the invention.

Fig. 5 is a flowchart showing the operation of the second embodiment of the invention.

Fig. 6 is a diagram showing an example of message of the second embodiment.

Fig. 7 is a diagram showing an example of program code of the second embodiment.

Fig. 8 is a system configuration diagram of a still image processing apparatus in a third embodiment of the invention.

Fig. 9 is a flowchart showing its operation.

Fig. 10 is a diagram showing an example of program code of the third embodiment.

Fig. 11 is a system configuration diagram of a still image processing apparatus in a fourth embodiment of the invention.

Fig. 12 is a flowchart showing its operation.

Fig. 13 is a diagram showing an example of message of the fourth embodiment.

Fig. 14 is a diagram showing an example of program code of the fourth embodiment.

Fig. 15 is a system configuration diagram of a moving image processing apparatus in a fifth embodiment of the invention.

Fig. 16 is a flowchart showing its operation.

Fig. 17 is a diagram showing an example of message of the fifth embodiment.

Fig. 18 is a diagram showing an example of program code thereof.

Fig. 19 is a system configuration diagram of a still image processing apparatus in a sixth embodiment of the invention.

Fig. 20 is a flowchart showing its operation.

Fig. 21 is a diagram showing an example of message of the sixth embodiment.

Fig. 22 is a diagram showing an example of program code thereof.

Fig. 23 is a system configuration diagram of a still image processing apparatus in a seventh embodiment of the invention.

Fig. 24 is a flowchart showing its operation.

Fig. 25 is a diagram showing an example of message of the seventh embodiment.

Fig. 26 is a diagram showing an example of program code thereof.

Fig. 27 is a system configuration diagram of a still image processing apparatus in an eighth embodiment of the invention.

Fig. 28 is its hardware configuration diagram.

Fig. 29 is a flowchart showing its operation.

Fig. 30 is a system configuration diagram of a still image processing apparatus in a ninth embodiment of the invention.

Fig. 31 is a flowchart showing its operation.

Fig. 32 is a system configuration diagram of a still image processing apparatus in a tenth embodiment of the invention.

Fig. 33 is its hardware configuration diagram.

Fig. 34 is a flowchart showing its operation.

Fig. 35 is a diagram showing an example of message of the tenth embodiment.

Fig. 36 is a flowchart showing the operation of a still image processing apparatus in an eleventh embodiment of the invention.

Fig. 37 is a system configuration diagram of a status monitoring apparatus in a twelfth embodiment of the invention.

Fig. 38 is its hardware configuration diagram.

Fig. 39 is a flowchart showing its operation.

Fig. 40 is a diagram showing an example of message thereof.

Fig. 41 is a diagram showing an example of program code of the twelfth embodiment.

Fig. 42 is a flowchart showing the operation of a thirteenth embodiment of the invention.

Fig. 43 is a diagram showing an example of program code thereof.

### DETAILED DESCRIPTION OF THE EMBODIMENTS

Referring now to the drawings, embodiments of the invention are described in detail below.

### Embodiment 1

A first embodiment is explained.

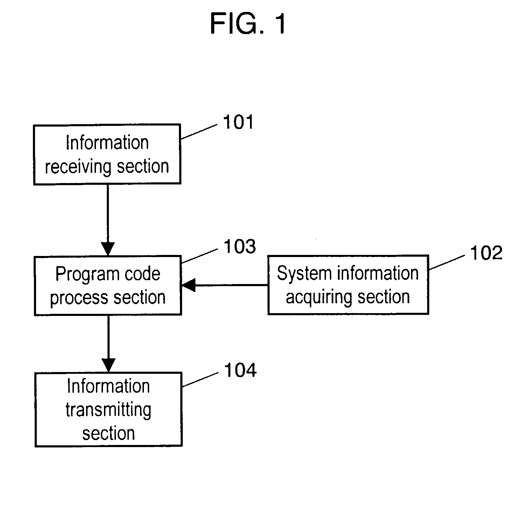

The first embodiment of the invention is a contents data processing apparatus which is a kind of information processing apparatus. Fig. 1 is a system configuration diagram of the contents data processing apparatus relating to the first embodiment of the invention.

In Fig. 1, an information receiving section 101 is a system code for receiving a message composed of contents data and program code for processing the contents data, and separating into the contents data and program code. A system information acquiring section 102 acquires system information. A program code process section 103 executes the program code on the contents data, and processes the contents data depending on the system information acquired by the system information acquiring section 102. An information transmitting section 104 reorganizes and transmits the contents data processed by the program code process section 103, such as still image data, and the program code.

In this configuration, specifically, the information receiving section 101 corresponds to the information receiving means of the invention, the system information acquiring section 102 to the system information acquiring means, the program code process section 103 to the program code executing means, and the information transmitting section 104 to the information transmitting means, respectively.

Each means is composed of system code, and each means of the system configuration in each one of the following embodiments is composed of each system code, and hence individual explanation is omitted.

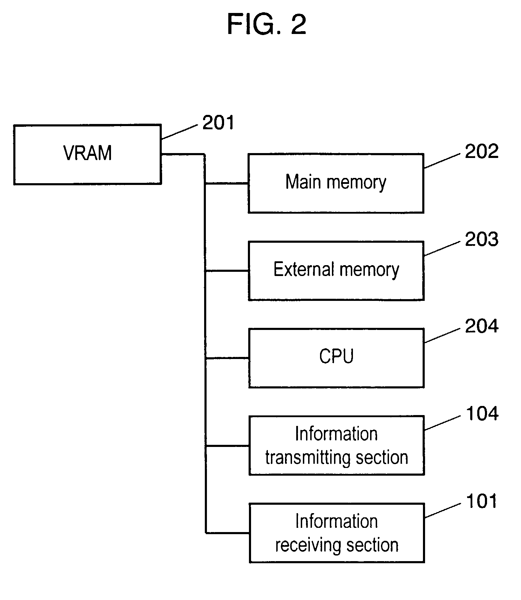

A hardware configuration of the embodiment is shown in Fig. 2. Fig. 2 is basically same as the configuration of a computer system, and further the information receiving section 101 for receiving information through the network and the information transmitting section 104 for transmitting information are added. In Fig. 2, same components as in the system configuration in Fig. 1 are identified with same reference numerals, and the explanation is omitted.

In Fig. 2, a VRAM 201 stores data for display. A main memory 202 stores program for processing and data at the time of execution. An external memory 203 stores program and data. A CPU 204 loads the program stored in the external memory 203 into the main memory 202, and executes it.

The program stored in the external memory 203 is being read in from a computer program product having a computer readable system code recorded in a computer usable recording medium such as CR-ROM or MO.

This program includes:
(1) A computer readable system code for receiving a message composed of contents data and program code for processing the contents data, and separating into the contents data and its program code;
(2) A computer readable system code for acquiring system information, and a computer readable system code for processing the contents data by executing the program code depending on the acquired system information on the contents data; and
(3) A computer readable system code for reorganizing and transmitting the message composed of contents data processed by the program code and its program code.

This program may be either read in directly from the computer program product, or read in through the network.

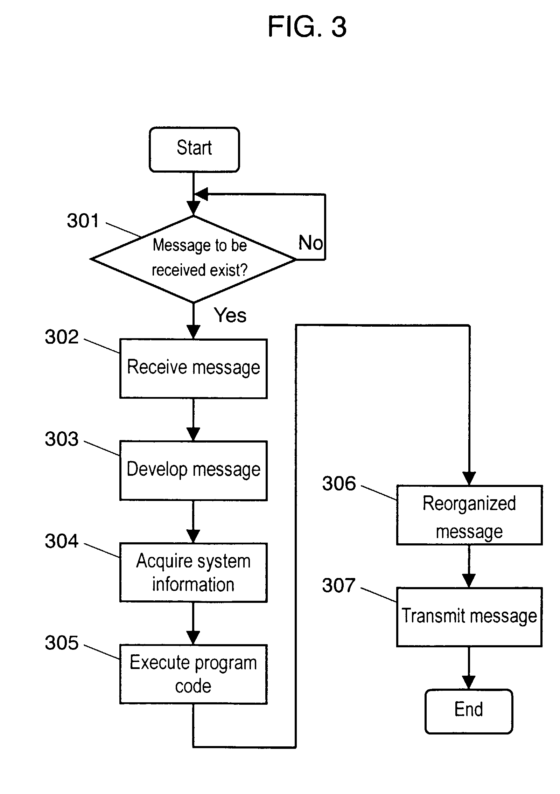

The operation of the contents data processing apparatus of the embodiment having such structure is explained below while referring to the flowchart in Fig. 3.

At step 301, checking if there is a message to be received or not, and if found, the process goes to step 302, or otherwise step 301 is repeated.

At step 302, the information receiving section 101 receives the message composed of contents data and program code for processing the contents data.

In this embodiment, the message is supposed to be composed of one piece of contents data and one program code. But the message may include plural pieces of contents data, or plural program codes.

For example, the message describing a series of processes by using plural classes such as object oriented language may include plural program codes. Or, when selecting from plural processes depending on the system information for acquiring processing of contents data, the message may include a program code for each one of the plural processes.

The message is received through the network. The received message is once stored in the external memory 203. When accumulation in the external memory 203 is over, the process goes to step 303.

At step 303, the received message is developed into contents data and program code by the information receiving section 101. The message composed of contents data and program code is composed by using, for example, the tar format archive used in UNIX or MIME format archive used in electronic mail. The embodiment is explained by using the MIME format archive, but it is not necessarily limited.

The developed contents data and program code are saved, for example, in a same directory of the external memory 203 so as to correspond to each other. After the development, the process goes to step 304.

At step 304, the system information acquiring section 102 acquires the system information. The system information is the intrinsic information of the system, such as the communication speed of connection network, CPU load, usable memory size, and usable external memory size. The system information is acquired for each device. The acquired system information is stored in the external memory 203 of the system.

The acquired system information may be hold on the main memory 202. In order to acquire system information from the program, a library for acquiring the information is prepared in the system. The system information is acquired by using the application programming interface (API) of the library.

When the acquisition of system information is finished, the process goes to step 305. At step 305, the program code developed at step 303 is executed by the program code process section 103. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the contents processing system may receive a new message during execution of program code.

When execution of program code is finished, the process goes to step 306.

At step 306, the information transmitting section 104 reorganizes the contents data and program code issued as a result of execution of program code at step 305.

The method of reorganizing is same as the archive method of the received message. After being reorganized, the process goes to step 307.

At step 307, the information transmitting section 104 transmits the message reorganized at step 306 to the network terminal demanding the contents data. The destination of transmission is not limited to the network terminal, but may be the same content data processing apparatus.

Thus, according to the embodiment, the system information is acquired, and process of the contents data received from outside is judged and executed depending on the acquired information.

### Embodiment 2

A second embodiment is explained.

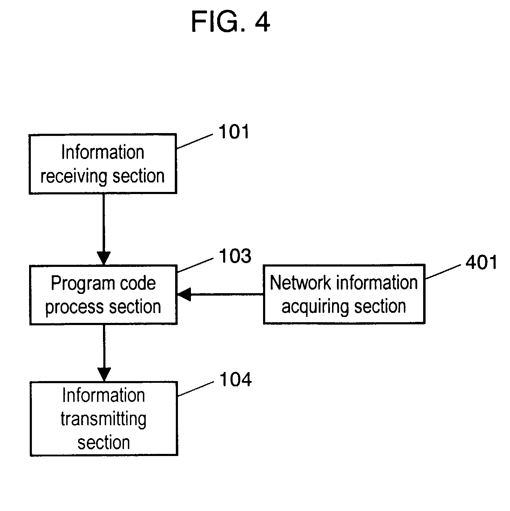

In the second embodiment of the invention, the information processing apparatus is a still image processing apparatus. Fig. 4 is a system configuration diagram of the still image processing apparatus according to the second embodiment of the invention. Of the components in Fig. 4, the same parts as in the first embodiment shown in Fig. 1 are identified with same reference numerals, and the explanation is omitted.

A network information acquiring section 401 acquires information of communication circuit.

The network information acquiring section 401 corresponds to the system information acquiring means of the invention.

The hardware configuration of the embodiment is identical with that of the first embodiment shown in Fig. 2, and its explanation is omitted.

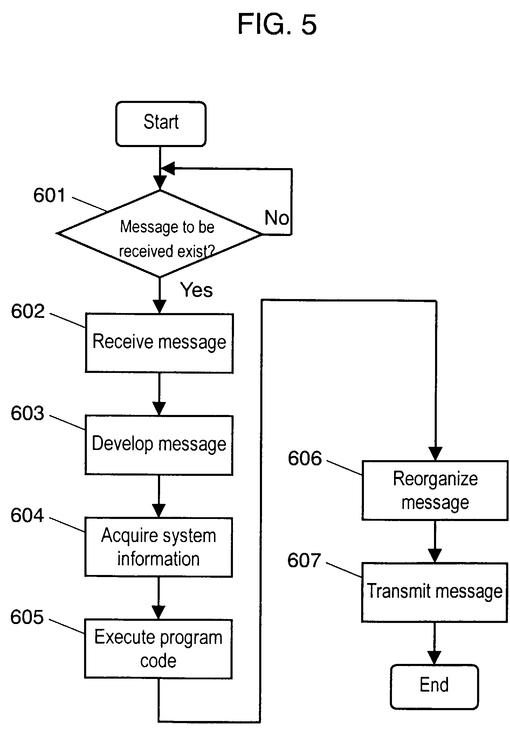

The operation of the still image processing apparatus having such structure is explained below while referring to the flowchart in Fig. 5.

Steps 601 and 602 are same as steps 301 and 302 in Fig. 3 relating to the first embodiment.

At step 603, the received message is developed into still image data and program code. The message composed of still image data and program code is composed by using, for example, the tar format archive used in UNIX or MIME format archive used in electronic mail. The embodiment is explained by using the MIME format archive, but it is not necessarily limited.

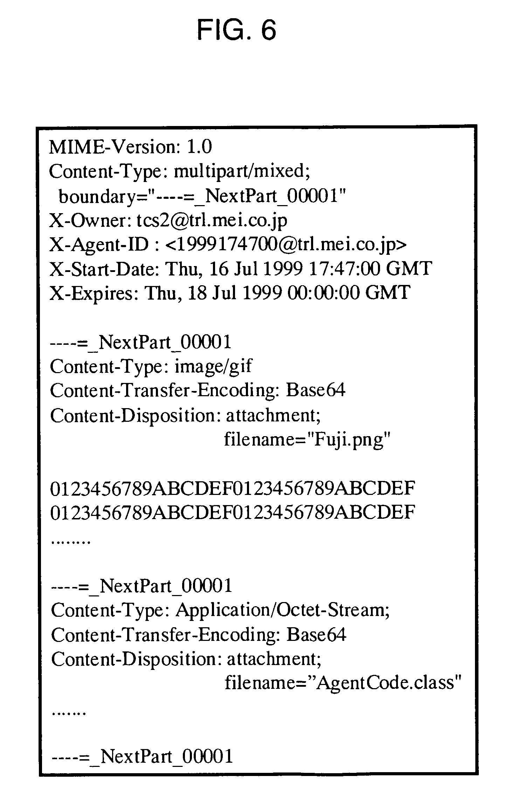

In the case of MIME, the received message is expressed in a format at shown in Fig. 6. In the example in Fig. 6, the still image data (Fuji.png) and program code (AgentCode.class) are archived.

The developed still image data and program code are saved, for example, in a same directory of the external memory 203 so as to correspond to each other. After the development, the process goes to step 604.

At step 604, the same system information acquiring process as at step 304 in the first embodiment is executed.

At step 605, the program code developed at step 603 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the still image processing system may receive a new message during execution of program code.

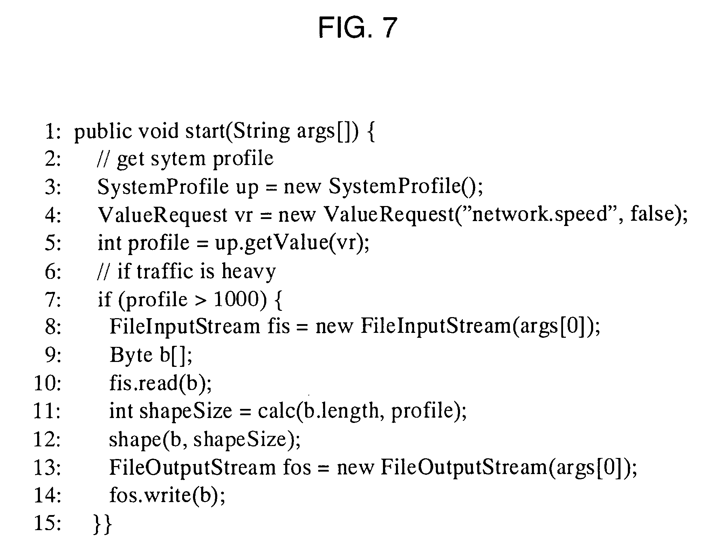

A part of execution program code is shown in Fig. 7. Fig. 7 shows a development of the program code in the archive by MIME shown in Fig. 6.

The language used in the example in Fig. 7 is Java (Java is the trademark of Sun Microsystems, Inc.).

Processing of this program code may be explained as follows.

First, the network information is acquired by the network information acquiring section 401 (lines 3-5).

If the circuit speed (communication speed) to the acquired message transmission destination is smaller than a specific value, the size to be reduced is calculated by using the still image data size and the circuit speed (lines 7-11).

Then the still image data is reduced to the calculated size (line 12).

That is, by executing the code of the Fig. 7, if the speed of the circuit to be sent is slow, by reducing the size of the still image data to be transmitted, the image size can be decreased, so that the communication delay can be suppressed.

In this embodiment, Java is used as the language, but any other language may be used as far as not depending on the execution environment such as Perl or Tcl/Tk.

When execution of program code is finished, the process goes to step 606.

At step 606, the still image data and program code issued as a result of execution of program code at step 605 are reorganized. The method of reorganizing is same as the archive method of the received message. In this embodiment, since MIME is used in the archive, the two pieces of data are reorganized by using MIME. After being reorganized, the process goes to step 607.

At step 607, the message reorganized at step 606 is transmitted to the network terminal demanding the still image data. The destination of transmission is not limited to the network terminal, but may be the same still image data processing apparatus. In this case, also in the still image data processing apparatus at the destination of transmission, by processing same as at steps 601 to 606, by reducing the still image data even if the communication circuit speed is much slower, the communication delay can be decreased.

Thus, according to the embodiment, the network information is acquired by the network information acquiring section, and process of the still image data is judged and executed depending on the acquired information, so that the communication delay may be decreased.

Incidentally, in the embodiment, the image is reduced in scale in the process of still image data, but any image processing may be possible as far as the size of the still image data can be decreased. That is, the process for extracting only important portions of the still image data or the process for decreasing the number of colors may be executed similarly.

### Embodiment 3

A third embodiment is explained.

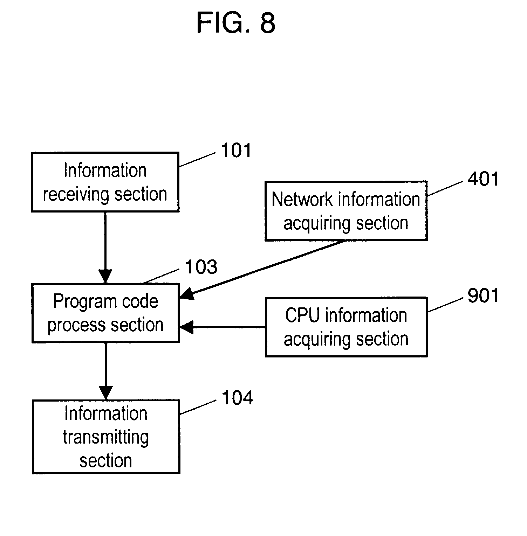

In the third embodiment of the invention, the information processing apparatus is a still image processing apparatus. Fig. 8 is a system configuration diagram of the still image processing apparatus according to the third embodiment of the invention. Of the components in Fig. 8, the same parts as in the first embodiment shown in Fig. 1 are identified with same reference numerals, and the explanation is omitted.

A CPU information acquiring section 901 acquires information of the CPU responsible for processing.

The CPU information acquiring section 901 and network information acquiring section 401 correspond to the system information acquiring means of the invention.

The hardware configuration of the embodiment is identical with that of the first embodiment shown in Fig. 2, and its explanation is omitted.

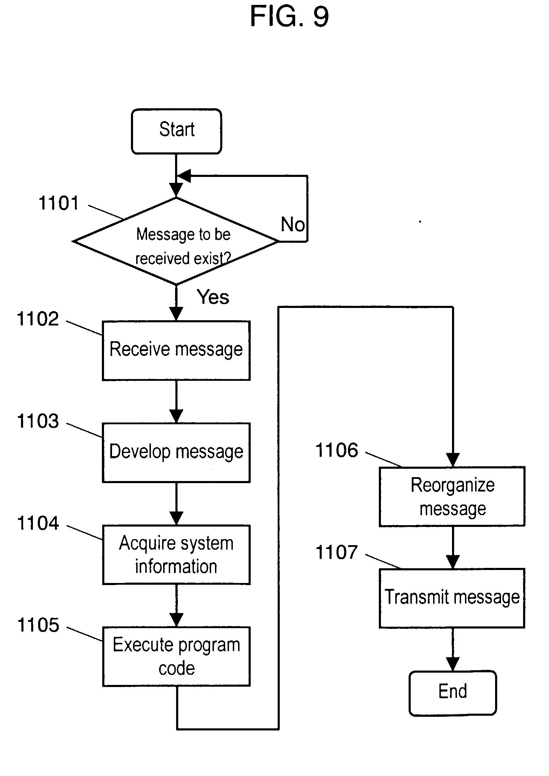

The operation of the still image processing apparatus having such structure is explained below while referring to the flowchart in Fig. 9.

Steps 1101 and 1102 are same as steps 301 and 302 in the first embodiment.

At step 1103, the received message is developed into still image data and program code. The received message is in the same format as the example in Fig. 6.

The developed still image data and program code are saved, for example, in a same directory of the external memory 203 so as to correspond to each other. After the development, the process goes to step 1104.

At step 1104, the same process as at step 304 in the first embodiment is executed.

At step 1105, the program code developed at step 1103 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the still image processing system may receive a new message during execution of program code.

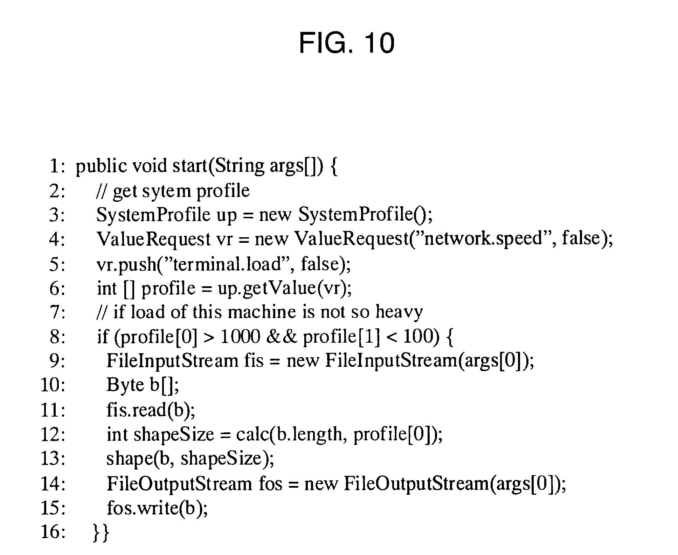

A part of execution program code is shown in Fig. 10. Fig. 10 shows a development of the program code in the archive by MIME shown in Fig. 6. The language used in the example in Fig. 10 is Java.

Processing of this program code may be explained as follows.

First, the network information and CPU information are acquired by the network information acquiring section 401 and CPU information acquiring section 901 (lines 3-6).

If the acquired circuit speed is smaller than a specific value and the CPU load is high, the size to be reduced is calculated by using the still image data size and the circuit speed (lines 8-12).

Then the still image data is reduced to the calculated size (line 13).

That is, by executing the code of the Fig. 10, in the case of processing of still image data, the system load is judged, and by processing when the load is not high, the load distribution is realized. In this embodiment, Java is used as the language, but any other language may be used as far as not depending on the execution environment such as Perl or Tcl/Tk.

When execution of program code is finished, the process goes to step 1106.

At step 1106 and step 1107, the same process as at step 606 and step 607 in the second embodiment is executed respectively.

Thus, according to the embodiment, the CPU information is acquired by the CPU information acquiring section, and process of the still image data is judged and executed depending on the acquired information, so that the load distribution can be realized.

### Embodiment 4

A fourth embodiment is explained.

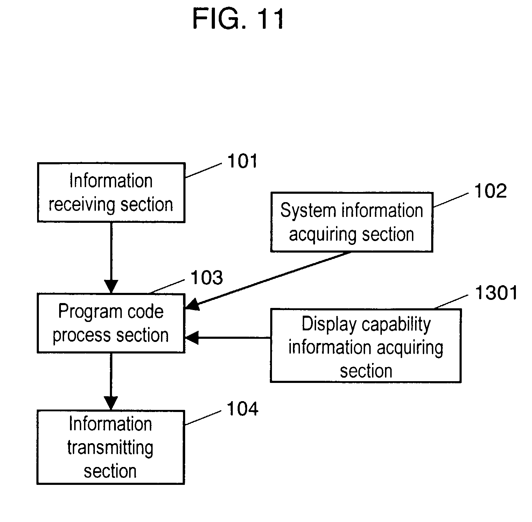

In the fourth embodiment of the invention, the information processing apparatus is a still image processing apparatus. Fig. 11 is a system configuration diagram of the still image processing apparatus according to the fourth embodiment of the invention. Of the components in Fig. 11, the same parts as in the first embodiment shown in Fig. 1 are identified with same reference numerals, and the explanation is omitted.

A display capability information acquiring section 1301 acquires the display capability information of the display device provided in the terminal device for displaying, by receiving the still image data as the contents data included in the message from the received message.

The display capability information acquiring section 1301 corresponds to the system information acquiring means of the invention.

The hardware configuration of the embodiment is identical with that of the first embodiment shown in Fig. 2, and its explanation is omitted.

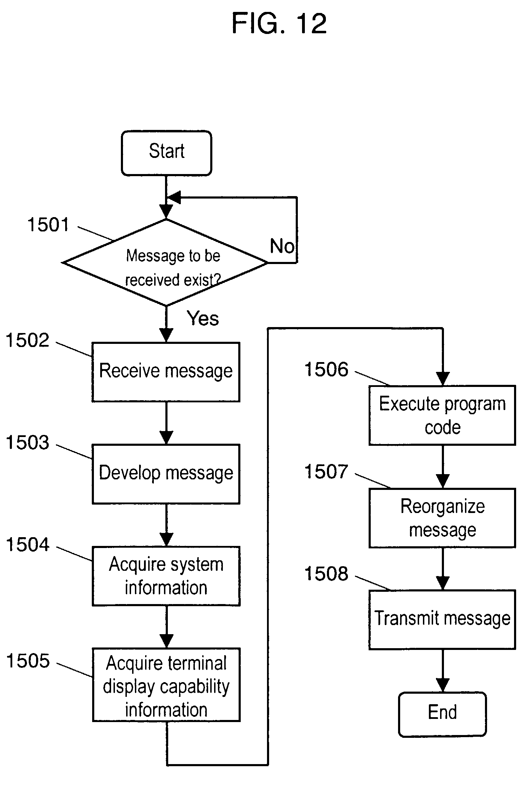

The operation of the still image processing apparatus having such structure is explained below while referring to the flowchart in Fig. 12.

Steps 1501 and 1502 are same as steps 301 and 302 in the first embodiment.

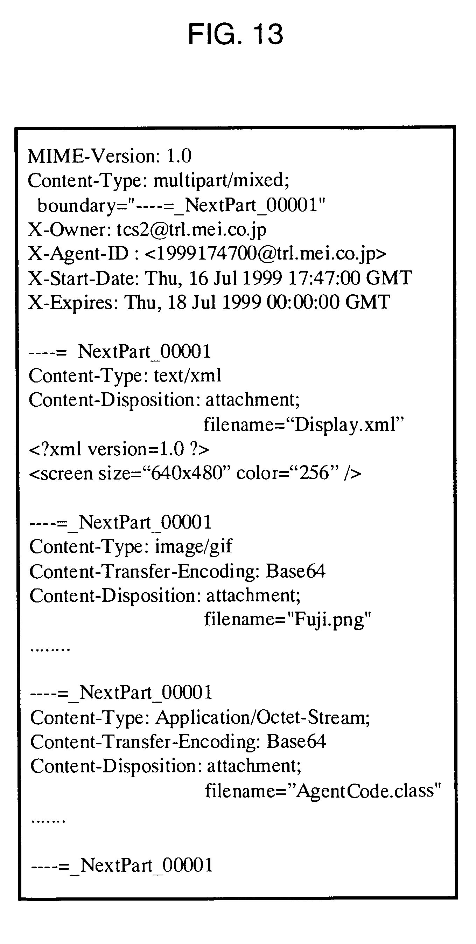

At step 1503, the received message is developed into terminal display capability information, still image data and program code. The message composed of terminal display capability information, still image data and program code is composed by using, for example, the tar format archive used in UNIX or MIME format archive used in electronic mail. The embodiment is explained by using the MIME format archive, but it is not necessarily limited. In the case of MIME, the received message is expressed in a format as shown in Fig. 13.

In the example in Fig. 13, the terminal display capability information (Display.xml), still image data (Fuji.png) and program code (AgentCode.class) are archived, and the terminal display capability information is descried in XML.

The developed terminal display capability information, still image data and program code are saved, for example, in a same directory of the external memory 203 so as to correspond to each other. After the development, the process goes to step 1504.

At step 1504, the same process as at step 304 in the first embodiment is executed.

At step 1505, from the terminal display capability information file developed at step 1503, the display capability information acquiring section 1301 acquires the terminal display capability information. In this embodiment, since the terminal display capability is described in XML, its content is acquired by using the XML parser.

The acquired data is stored in the system, and can be acquired by using the API.

At step 1506, the program code developed at step 1503 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the still image processing system may receive a new message during execution of program code.

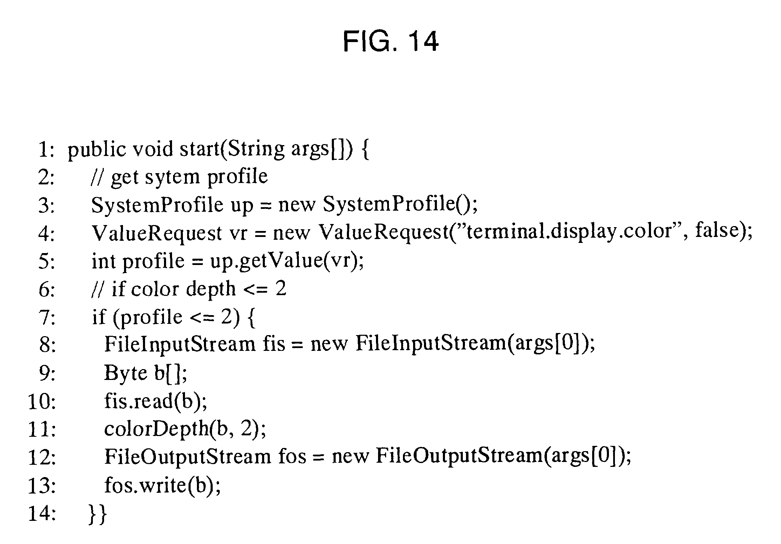

A part of execution program code is shown in Fig. 14.

Fig. 14 shows a development of the program code in the archive by MIME shown in Fig. 13. The language used in the example in Fig. 14 is Java.

Processing of this program code may be explained as follows.

First, the terminal display capability information is acquired (lines 3-5).

If the number of colors that can be displayed is small in the acquired terminal display capability, the still image data is decreased in the number of colors (line 11).

That is, by executing the code of Fig. 14, if the display capability of the terminal to be sent is low, the still image data to be transmitted is adopted to the terminal, so that it can be looked up. In the embodiment, Java is used as the language, but any other language may be used as far as not depending on the execution environment such as Perl or Tcl/Tk.

When execution of program code is finished, the process goes to step 1507.

At step 1507 and step 1508, the same process as at step 606 and step 607 in the second embodiment is executed respectively.

Thus, according to the embodiment, the display capability information of the terminal for displaying the contents data is acquired by the display capability information acquiring section. Process of the still image data is judged and executed depending on the acquired information, so that the still image data can be looked up at the terminal.

### Embodiment 5

A fifth embodiment is explained.

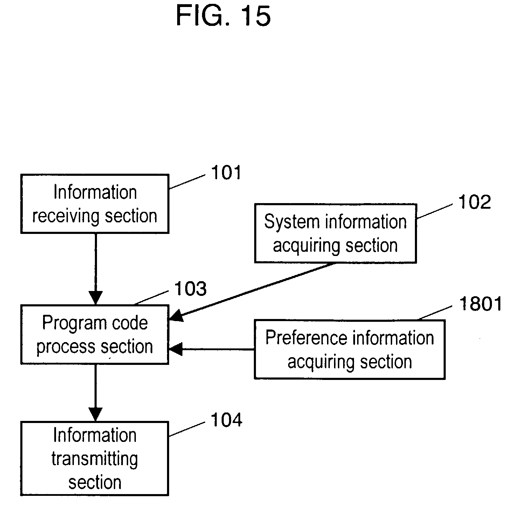

In the fifth embodiment of the invention, the information processing apparatus is a moving image processing apparatus. Fig. 15 is a system configuration diagram of the moving image processing apparatus according to the fifth embodiment of the invention. Of the components in Fig. 15, the same parts as in the first embodiment shown in Fig. 1 are identified with same reference numerals, and the explanation is omitted.

A preference information acquiring section 1801 acquires the preference information of the user existing in the received message.

The preference information acquiring section 1801 corresponds to the system information acquiring means of the invention.

The hardware configuration of the embodiment is identical with that of the first embodiment shown in Fig. 2, and its explanation is omitted.

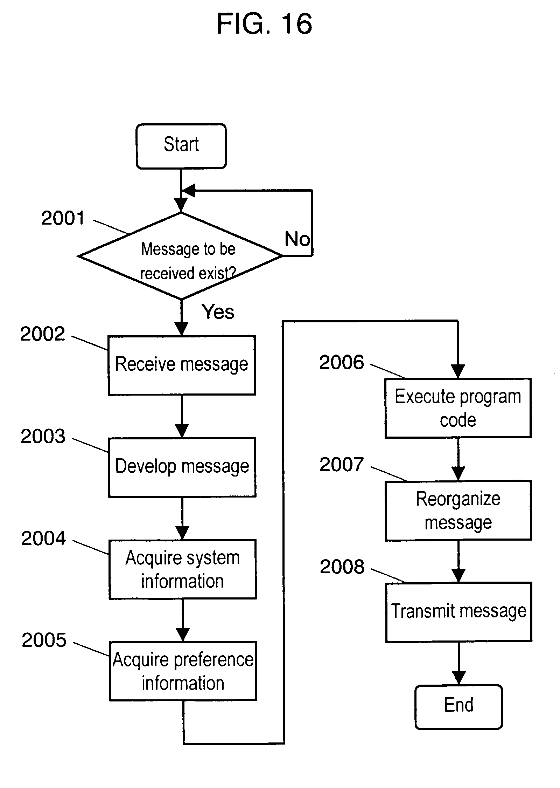

The operation of the moving image processing apparatus having such structure is explained below while referring to the flowchart in Fig. 16.

Steps 2001 and 2002 are same as steps 301 and 302 in the first embodiment.

At step 2003, the received message is developed into preference information, moving image data and program code. The message composed of preference information, moving image data and program code is composed by using, for example, the tar format archive used in UNIX or MIME format archive used in electronic mail.

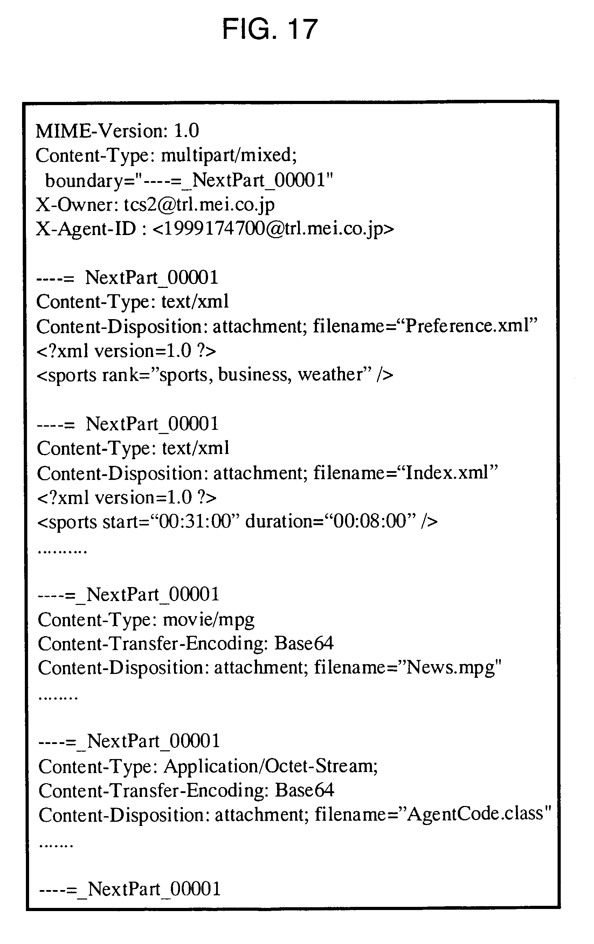

The embodiment is explained by using the MIME format archive, but it is not necessarily limited. In the case of MIME, the received message is expressed in a format as shown in Fig. 17.

In the example in Fig. 17, the preference information (Preference.xml), moving image data (News.mpg), index of moving image data (News.idx) and program code (AgentCode.class) are archived, and the preference information and index of moving image data are descried in XML.

In the embodiment, the moving image data is the news program, and its content is described in the index of the moving image data.

The developed preference information, moving image data and program code are saved, for example, in a same directory of the external memory 203 so as to correspond to each other.

After the development, the process goes to step 2004.

At step 2004, the same process as at step 304 in the first embodiment is executed.

At step 2005, from the preference information file developed at step 2003, the preference information acquiring section 1801 acquires the preference information. In this embodiment, since the preference of the user is described in XML, its content is acquired by using the XML parser. The acquired data is stored in the system, and can be acquired by using the API.

At step 2006, the program code developed at step 2003 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the moving image processing system may receive a new message during execution of program code.

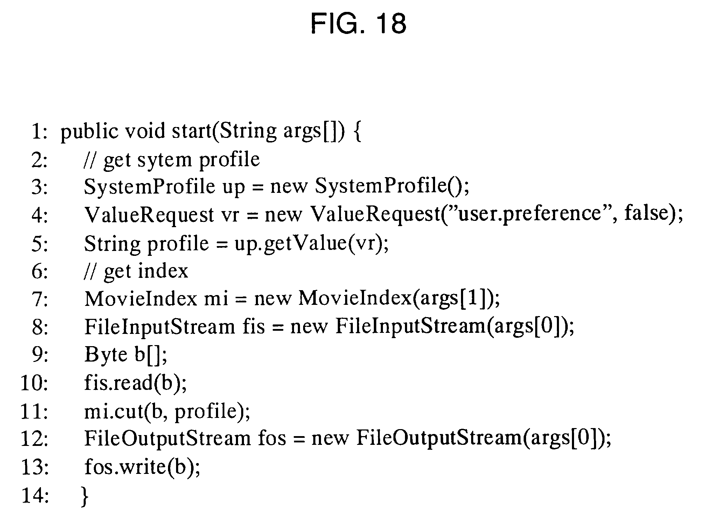

A part of execution program code is shown in Fig. 18.

Fig. 18 shows a development of the program code in the archive by MIME shown in Fig. 17. The language used in the example in Fig. 18 is Java.

Processing of this program code may be explained as follows.

First, the preference information and index of moving image data are acquired (lines 3-7).

From the acquired preference information and the index, the moving image data is cut into scenes (line 11).

That is, by executing the code of Fig. 18, scenes regarded unnecessary are deleted in the moving image to be sent, and only the scenes preferred by the user can be transmitted.

In the embodiment, Java is used as the language, but any other language may be used as far as not depending on the execution environment such as Perl or Tcl/Tk.

When execution of program code is finished, the process goes to step 2007.

At step 2007 and step 2008, the same process as at step 606 and step 607 in the second embodiment is executed respectively.

In the embodiment, the data is processed only on the basis of the preference information, but the system information such as network information may be further added to the condition.

### Embodiment 6

A sixth embodiment is explained.

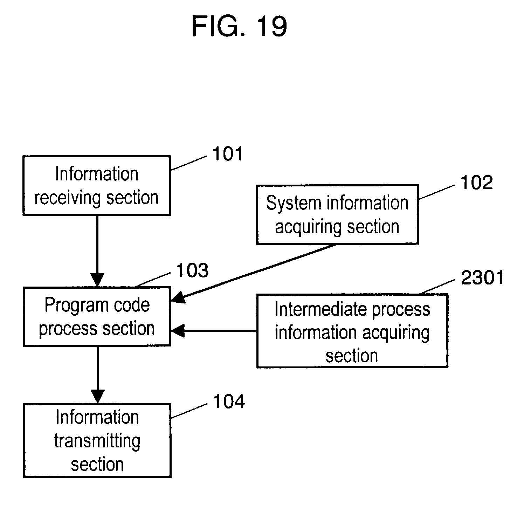

In the sixth embodiment of the invention, the information processing apparatus is a still image processing apparatus. Fig. 19 is a system configuration diagram of the still image processing apparatus according to the sixth embodiment of the invention. Of the components in Fig. 19, the same parts as in the first embodiment shown in Fig. 1 are identified with same reference numerals, and the explanation is omitted.

An intermediate process information acquiring section 2301 acquires the intermediate process information included in the received message, and continues to process the still image data succeeding the message transmission origin.

The intermediate process information acquiring section 2301 corresponds to the program preprocessing means of the invention.

The hardware configuration of the embodiment is identical with that of the first embodiment shown in Fig. 2, and its explanation is omitted.

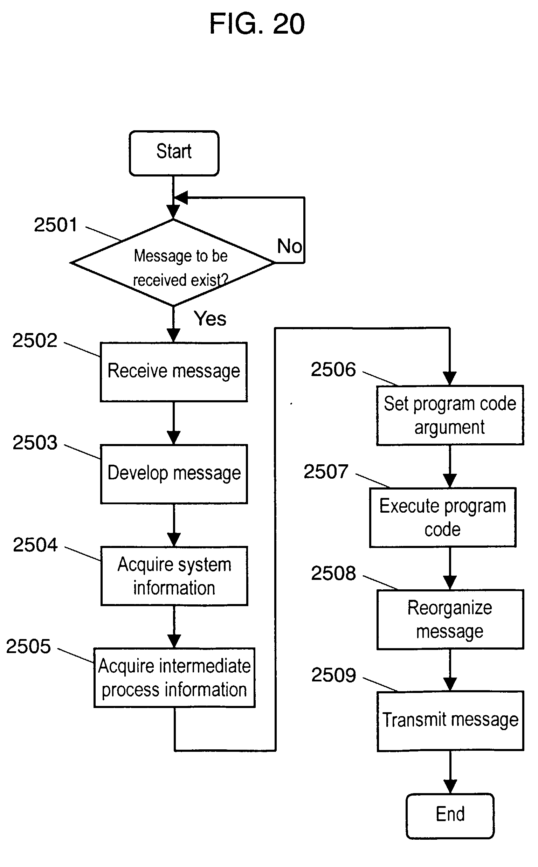

The operation of the still image processing apparatus having such structure is explained below while referring to the flowchart in Fig. 20.

Steps 2501 and 2502 are same as steps 301 and 302 in the first embodiment.

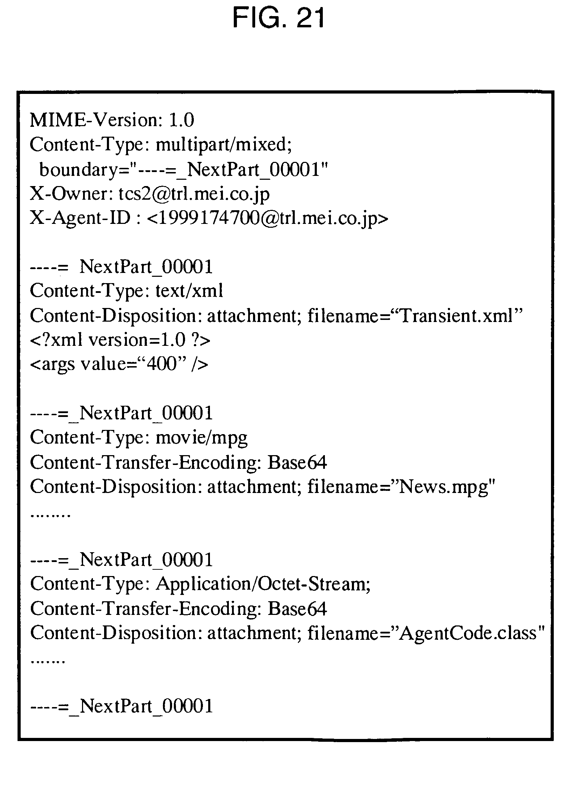

At step 2503, the received message is developed into intermediate process information, still image data and program code. The message composed of intermediate process information, still image data and program code is composed by using, for example, the tar format archive used in UNIX or MIME format archive used in electronic mail. The embodiment is explained by using the MIME format archive, but it is not necessarily limited. In the case of MIME, the received message is expressed in a format as shown in Fig. 21.

In the example in Fig. 21, the intermediate process informatio (Transient.xml), index of moving image data (News.mpg) and program code (AgentCode.class) are archived, and the intermediate process information is described in XML.

The developed intermediate process information, still image data and program code are saved, for example, in a same directory of the external memory 203 so as to correspond to each other. After the development, the process goes to step 2504.

At step 2504, the same process as at step 304 in the first embodiment is executed.

At step 2505, from the intermediate process information file developed at step 2503, the intermediate process information acquiring section 2301 acquires the intermediate process information. In this embodiment, since the intermediate process information is described in XML, its content is acquired by using the XML parser.

The intermediate process information is the necessary information in the following system, which is written at the message transmission origin. In this embodiment, since the CPU load is high at the message transmission origin, only the reduction size is calculated among image processing. The result of calculation is described in the intermediate process information.

At step 2506, the intermediate process information acquiring section 2301 sets the intermediate process information acquired at step 2505 as the argument of the execution program. Suppose the program to be executed is fixed, and the method to be executed first is also supposed to be fixed (it is "start" in this embodiment). The intermediate process information is set in the argument of the method "start".

At step 2507, the program code developed at step 2503 is executed. For execution of the program, a new process or thread is assigned, so that it may be possible to process even if the still image processing system may receive a new message during execution of program code.

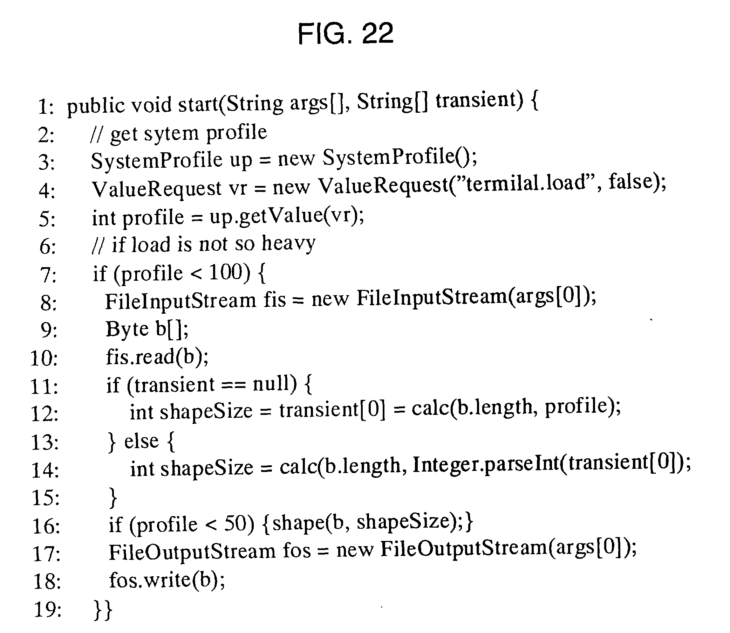

A part of execution program code is shown in Fig. 22.

Fig. 22 shows a development of the program code in the archive by MIME shown in Fig. 21.

The language used in the example in Fig. 22 is Java.

Processing of this program code may be explained as follows.

First, the CPU load information in this processing apparatus is acquired (lines 3-5).

If the CPU load is not high, the image is reduced in scale (line 7).

In the image reduction process, further, if the CPU load is not so high, the reduction is processed. Otherwise, only the reduction size is calculated (lines 8-16).

That is, by executing the code of Fig. 22, the still image is processed in the still image to be sent. At this time, the processing can be done in gradual steps depending on the CPU load at this time.

In the embodiment, Java is used as the language, but any other language may be used as far as not depending on the execution environment such as Perl or Tcl/Tk.

When execution of program code is finished, the process goes to step 2508.

At step 2508 and step 2509, the same process as at step 606 and step 607 in the second embodiment is executed respectively.

In the embodiment, the data is processed only on the basis of the CPU information, but the system information such as network information may be further added to the condition.

### Embodiment 7

A seventh embodiment is explained.

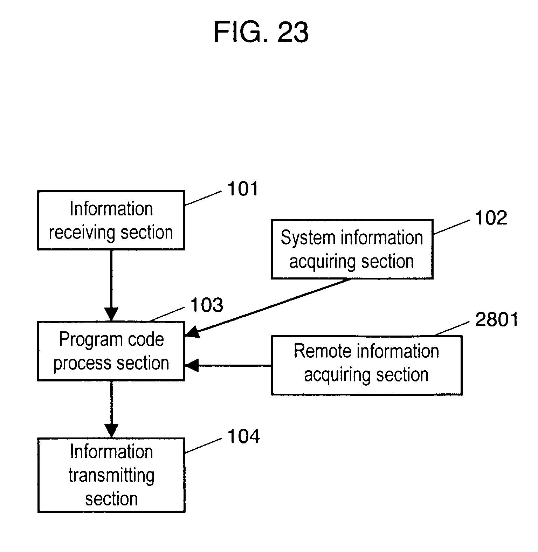

In the seventh embodiment of the invention, the information processing apparatus is a still image processing apparatus. Fig. 23 is a system configuration diagram of the still image processing apparatus according to the seventh embodiment of the invention. Of the components in Fig. 23, the same parts as in the first embodiment shown in Fig. 1 are identified with same reference numerals, and the explanation is omitted.

A remote information acquiring section 2801 acquires information existing in other apparatus on the network by using the position information included in the received message.

The remote information acquiring section 2801 corresponds to the remote information acquiring means of the invention.

The hardware configuration of the embodiment is identical with that of the first embodiment shown in Fig. 2, and its explanation is omitted.

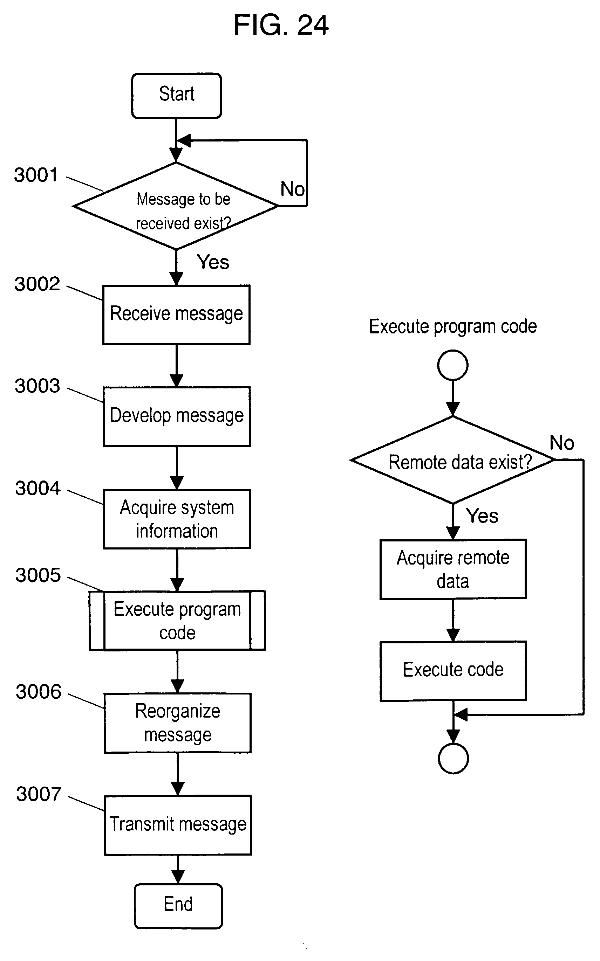

The operation of the still image processing apparatus having such structure is explained below while referring to the flowchart in Fig. 24.

Steps 3001 and 3002 are same as steps 301 and 302 in the first embodiment.

At step 3003, the received message is developed into still image data and program code. Herein, suppose the still image data does not contain the data itself but describes only the location of the data. The message composed of still image data and program code is composed by using, for example, the tar format archive used in UNIX or MIME format archive used in electronic mail.

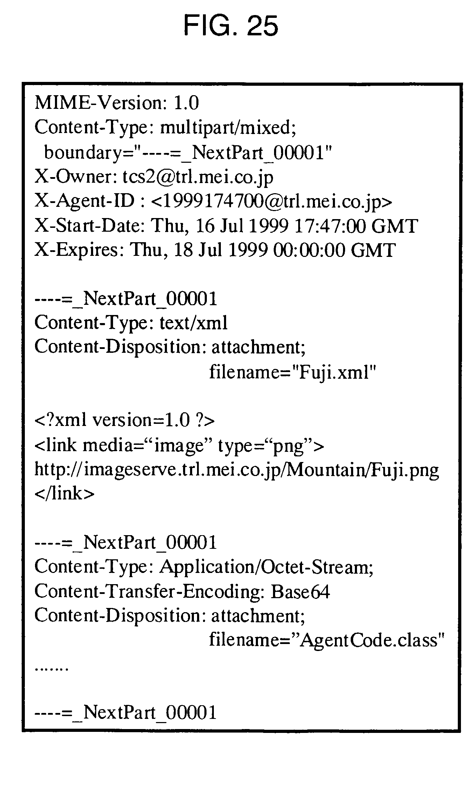

The embodiment is explained by using the MIME format archive, but it is not necessarily limited. In the case of MIME, the received message is expressed in a format as shown in Fig. 25. In the example in Fig. 25, the still image data (Fuji.xml) and program code (AgentCode.class) are archived.

In the embodiment, the still image data is described by using XML, and the location of the still image data position information is described by using Uniform Resource Locator (URL). In the example in Fig. 25, the location of the still image data is specified by "link" tag.

The developed still image data and program code are saved, for example, in a same directory of the external memory 203 so as to correspond to each other. After the development, the process goes to step 3004.

At step 3004, the same process as at step 304 in the first embodiment is executed.

At step 3005, the program code developed at step 3003 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the still image processing system may receive a new message during execution of program code.

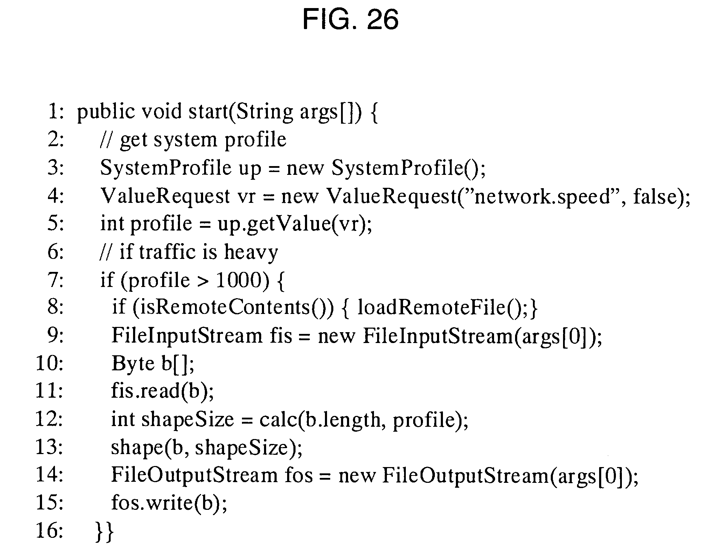

A part of execution program code is shown in Fig. 26.

Fig. 26 shows a development of the program code in the archive by MIME shown in Fig. 25. The language used in the example in Fig. 26 is Java.

Processing of this program code may be explained as follows.

First, the network information is acquired (lines 3-5).

If the acquired circuit speed is larger than a specific value, the remote information acquiring section 2801 acquires the still image data as the remote data through the network by the program code execution routine in Fig. 24. The still image data is acquired from the URL by taking out the location of the still image data from the XML file (line 8).

The size to be reduced is calculated by using the size of the still image data and the circuit speed (lines 9-12).

The still image data is reduced to the calculated size (line 13).

That is, by executing the code of Fig. 26, the still image data is acquired through the network whenever required. Thus, the message size is smaller, and the communication delay can be decreased.

In the embodiment, Java is used as the language, but any other language may be used as far as not depending on the execution environment such as Perl or Tcl/Tk.

When execution of program code is finished, the process goes to step 3006.

At step 3006, the still image data and program code issued as a result of execution of program code at step 3005 are reorganized.

The method of reorganizing is same as the archive method of the received message. In this embodiment, since MIME is used in the archive, these two sets of data are reorganized by using MIME. After being reorganized, the process goes to step 3007.

At step 3007, the message reorganized at step 3006 is transmitted to the network terminal demanding the still image data. The destination of transmission is not limited to the network terminal, but may be the same still image data processing apparatus. In this case, also in the still image data processing apparatus at the destination of transmission, the same process as at steps 3001 to 3006 is executed. Thus, if the communication circuit speed is further slower, by reducing the still image data, the communication delay can be decreased.

By thus acquiring the network information, and judging and executing the process of still image data depending on the acquired information, the communication delay can be decreased.

Incidentally at step 3006 of the embodiment, without reorganizing the issued still image data, by using the descriptive data describing its location, the communication cost can be further saved.

In the embodiment, in processing of still image data, the image is reduced, but any image processing may be done as far as the size of the still image data is decreased. That is, the process of picking up only important parts of the still image data, or the process of curtailing the number of colors may be similarly applicable.

### Embodiment 8

An eighth embodiment is explained.

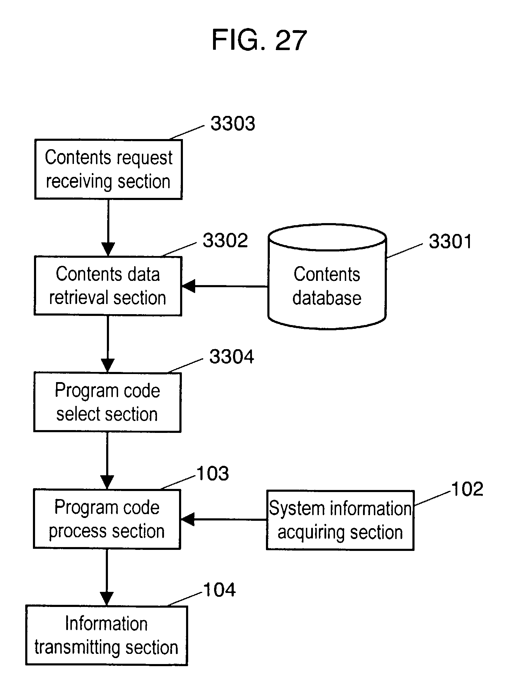

In the eighth embodiment of the invention, the information processing apparatus is a still image processing apparatus. Fig. 27 is a system configuration diagram of the still image processing apparatus according to the eighth embodiment of the invention. Of the components in Fig. 27, the same parts as in the first embodiment shown in Fig. 1 are identified with same reference numerals, and the explanation is omitted.

A contents database 3301 accumulates contents data. A contents data retrieval section 3302 retrieves the contents database 3301. A contents request receiving section 3303 receives a transmission request of contents data. A program code select section 3304 selects the program code for processing the contents data for the requested contents data.

Of these components, the contents database 3301 corresponds to the contents data accumulating means of the invention, the contents data retrieval section 3302 to the contents data retrieval means, the contents request receiving section 3303 to the request receiving means, and the program code select section 3304 to the program code selecting means, respectively.

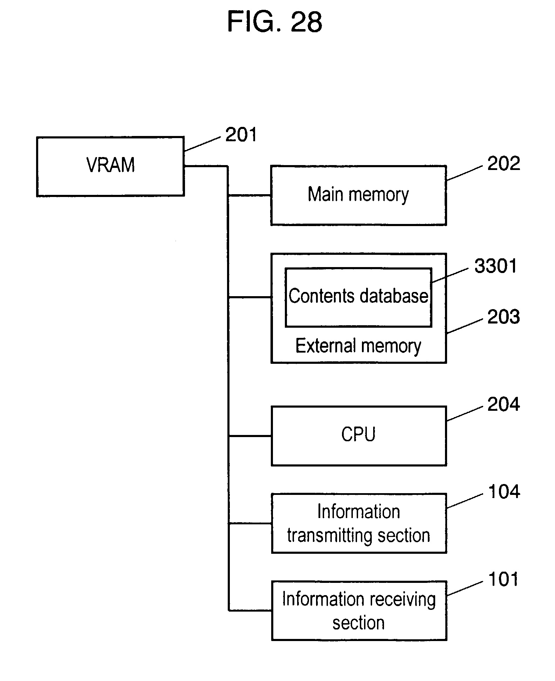

The hardware configuration of the embodiment is shown in Fig. 28. The components in Fig. 28 include the components shown in Fig. 2 and Fig. 27, and same parts are identified with same reference numerals and the explanation is omitted.

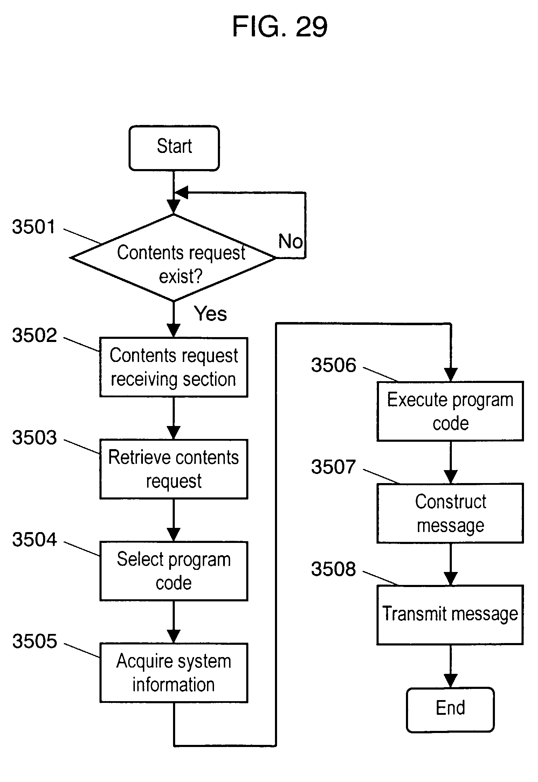

The operation of the still image processing apparatus having such structure is explained below while referring to the flowchart in Fig. 29.

At step 3501, it is checked if there is a transmission request for the still image accumulated in the contents database 3301, and if the still image is requested, the process goes to step 3502, or otherwise step 3501 is repeated.

At step 3502, the contents request received by the contents request receiving section 3303 is accepted. The contents request is, for example, a request from the Web browser in the case of WWW (World Wide Web). The accepted contents request is put on the queue and is processed sequentially.

At step 3503, the contents specified by the contents request are retrieved from the contents database 3301 by the contents data retrieval section 3302. In the contents database 3301, the contents are stored in pair with the media type, and both are issued as a result of retrieval.

At step 3504, concerning the contents retrieved at step 3503, the program code select section 3304 selects the program code for processing the contents. As the method of selection, for example, using a correspondence table of the media types accompanying the contents retrieved at step 3503 and program codes, the table is referred to depending on the result of retrieval.

Instead of the table format, alternatively, by using selection rules, the program code may be selected by the combination of selection rules. Or it may be selected by using the information contained in the contents request.

Step 3505 is same as step 304 in the first embodiment.

At step 3506, the program code process section 103 executes the program code selected at step 3504. Suppose the program to be executed is fixed and identified with its file name. For execution of the program, a new process or thread is assigned, so that it may be possible to process even if the still image processing system may receive a new contents request during execution of program code.

A part of execution program code is shown in Fig. 7.

Fig. 7 shows a development of the program code in the archive by MIME shown in Fig. 6. The language used in the example in Fig. 7 is Java.

Processing of this program code may be explained as follows.

First, the network information is acquired (lines 3-5).

If the acquired circuit speed is larger than a specific value, the size to be reduced is calculated by using the size of the still image data and the circuit speed (lines 7-11).

The still image data is reduced to the calculated size (line 12).

That is, by executing the code of Fig. 7, when the speed of the circuit of transmission is slow, by reducing the size of the still image data to be transmitted, the image size can be reduced, and the communication delay may be decreased. In the embodiment, Java is used as the language, but any other language may be used as far as not depending on the execution environment such as Perl or Tcl/Tk.

When execution of program code is finished, the process goes to step 3507.

At step 3507, the still image data issued as a result of execution of program code at step 3506 and the program code are organized as message. The method of organizing is, for example, archiving of these two sets of data by using MIME. An example of organizing is shown in Fig. 6. When the organizing is over, the process goes to step 3508.

At step 3508, the message organized at step 3507 is transmitted to the network terminal demanding the still image data by the information transmitting section 104. The destination of transmission is not limited to the network terminal, but may be the same still image data processing apparatus. In this case, also in the still image data processing apparatus at the destination of transmission, the same process as at steps 601 to 606 in the second embodiment is executed, and therefore if the communication circuit speed is further slower, by reducing the still image data, the communication delay can be decreased.

By thus adding the program code for processing the contents data to the demanded contents data, it is possible to create message capable of processing the contents in any information processing apparatus on the network.

In the embodiment, the selected program code is executed, but execution of program code is not always required, and the retrieved contents data and the selected program code may be merely organized as the message and transmitted.

### Embodiment 9

A ninth embodiment is explained.

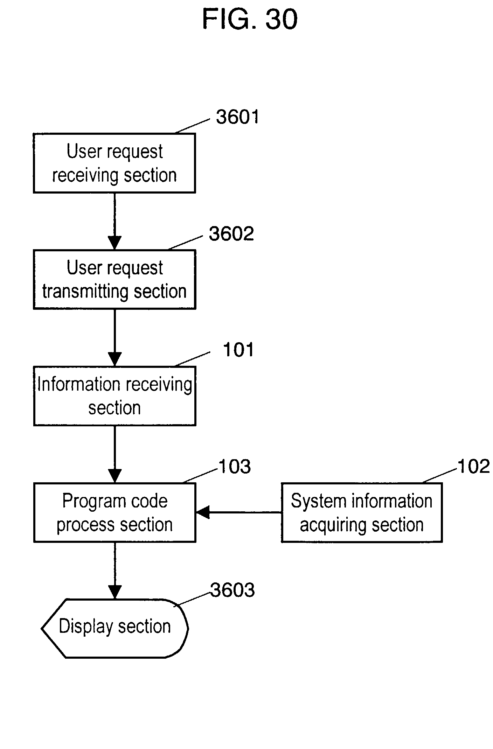

In the ninth embodiment of the invention, the information processing apparatus is a still image processing apparatus. Fig. 30 is a system configuration diagram of the still image processing apparatus according to the ninth embodiment of the invention. Of the components in Fig. 30, the same parts as in the first embodiment shown in Fig. 1 are identified with same reference numerals, and the explanation is omitted. A user request receiving section 3601 receives the user request. A user request transmitting section 3602 transmits the user request. A display unit 3603 displays the contents data.

Of these components, the user request receiving section 3601 corresponds to the user request receiving means in the invention, the user request transmitting section 3602 to the user request transmitting means, and the display unit 3603 to the contents display means, respectively.

The hardware configuration of the embodiment is identical with that of the first embodiment shown in Fig. 2, and its explanation is omitted.

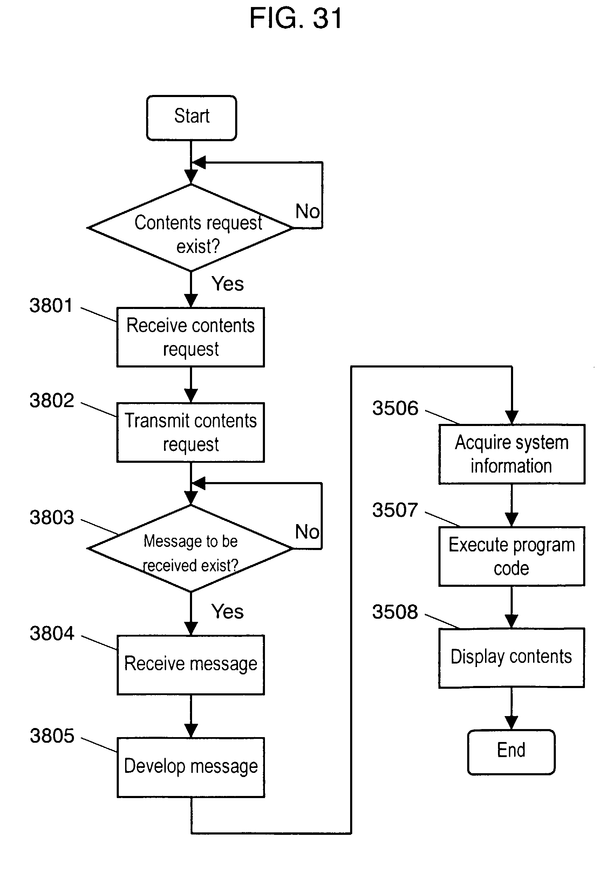

The operation of the still image processing apparatus having such structure is explained below while referring to the flowchart in Fig. 31.

At step 3801, the user request receiving section 3601 receives the request of still image from the user. The still image is requested, for example, by using the browser in the case of WWW. The still image data is classified hierarchically, and the user traces the layers and specifies the desired data. The still image data to be requested may be also specified by using the retrieval service existing on the Web server.

At step 3802, the request of still image data specified by the user at step 3801 is transmitted. For example, in the case of WWW, the browser requests the still image data. In this case, the request image is specified by URL. For example, it is specified as "mediaserver.Trl.mei.co.jp/Mountain/Fuji.png". The request of still image data is transmitted to other still image processing apparatus by the user request transmitting section 3602. After transmission of the request, the process waits for reception of message containing the specified still image data.

The process from step 3803 to step 3807 is same as the process at step 601 to step 605 in the second embodiment.

At step 3808, the still image data processed at step 3807 is displayed by the display unit 3603. The still image data may be displayed on the browser as used at step 3801, or by using an exclusive application.

Thus, receiving the user's request, the request is transmitted, and the still image data included in the received message can be displayed to the request.

The communication path to be used is not limited, and may include the LAN, wireless network, terrestrial wave broadcast, satellite broadcast, and CATV. However, when receiving the still image data by using the one-way communication path such as terrestrial wave broadcast or satellite broadcast, other communication path (for example, telephone circuit, LAN, CATV) is used for user's request.

### Embodiment 10

A tenth embodiment is explained.

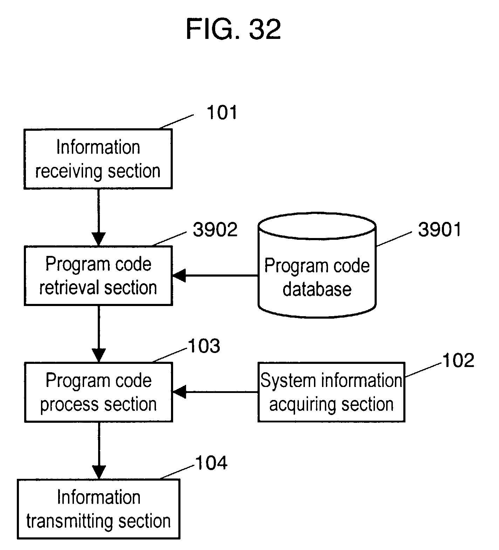

In the tenth embodiment of the invention, the information processing apparatus is a still image processing apparatus. Fig. 32 is a system configuration diagram of the still image processing apparatus according to the tenth embodiment of the invention. Of the components in Fig. 32, the same parts as in the first embodiment shown in Fig. 1 are identified with same reference numerals, and the explanation is omitted. A program code database 3901 accumulates program codes. A program code retrieval section 3902 retrieves a program code from the program code database 3901.

The program code database 3901 and program code retrieval section 3902 corresponds to the program code accumulating means and program code retrieval means of the invention respectively.

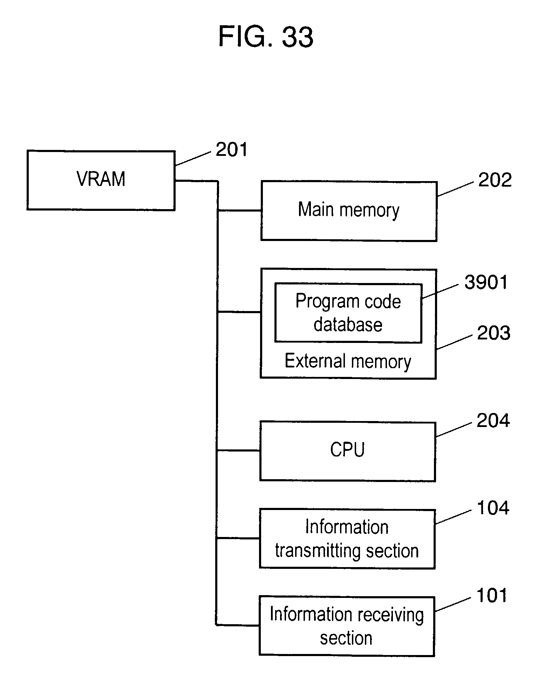

The hardware configuration of the embodiment is shown in Fig. 33. Components of the hardware configuration in Fig. 33 include the components shown in Fig. 1 and Fig. 32, and are identified with same reference numerals as in the drawings, and the explanation is omitted.

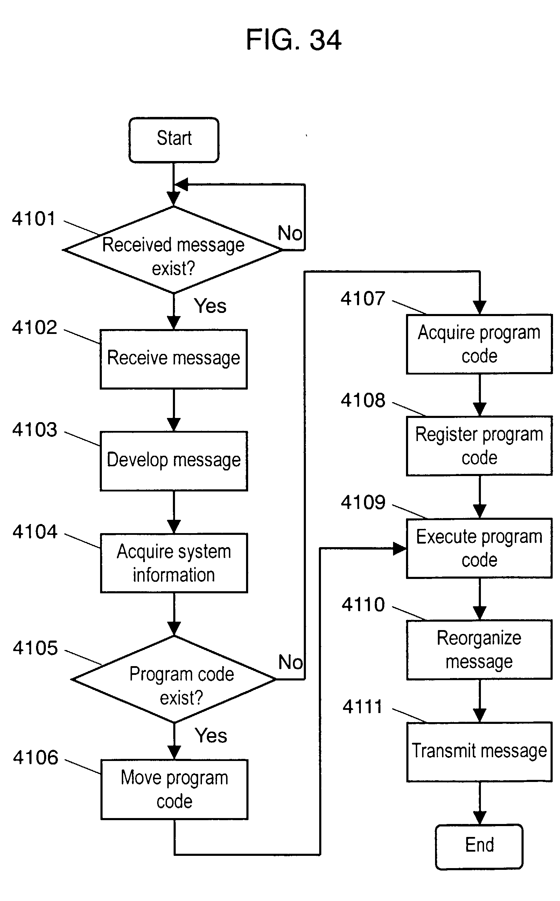

The operation of the still image processing apparatus having such structure is explained below while referring to the flowchart in Fig. 34.

Steps 4101 and 4102 are same as steps 301 and 302 in the first embodiment.

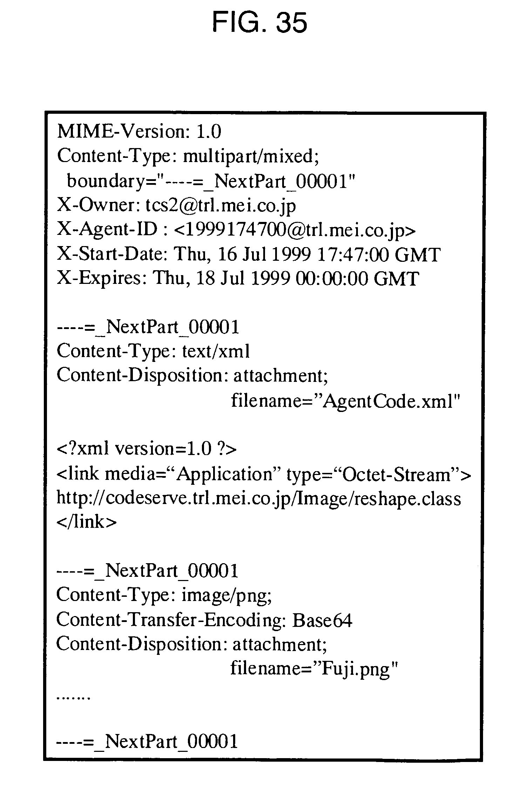

At step 4103, the received message is developed into still image data and program code. Herein, suppose the program code does not contain the code itself but describes only the location of the code. The message composed of still image data and program code is composed by using, for example, the tar format archive used in UNIX or MIME format archive used in electronic mail. The embodiment is explained by using the MIME format archive, but it is not necessarily limited. In the case of MIME, the received message is expressed in a format as shown in Fig. 35.

In the example in Fig. 35, the still image data (Fuji.png) and program code (AgentCode.xml) are archived.

In the embodiment, the program code is described by using XML, and the location of the program data is described by using URL. In the example in Fig. 35, the location of the program code is specified by "link" tag.

The developed still image data and program code are saved, for example, in a same directory of the external memory so as to correspond to each other. After the development, the process goes to step 4104.

At step 4104, the same process as at step 304 in the first embodiment is executed.

At step 4105, the program code retrieval section 3902 retrieves the program code developed at step 4103 to be executed from the program code database 3901. The program to be executed is, as shown in Fig. 35, specified by using the URL to indicate the location on the network. For retrieval from the program code database 3901,the URL is used. As a result of retrieval, if the program code is present in the program code database 3901, the process goes to step 4106, or otherwise the process goes to step 4107.

At step 4106, the retrieved program code is moved to the directory developed at step 4103. Then the process goes to step 4109.

In this embodiment, if the program code is present on the program code database 3901, this code is used unconditionally, but by comparing the version number with the program code on the network, the later version may be used. In this case, the program code on the network is later, the process goes to step 4107.

At step 4107, since the program code is not stored in the program code database 3901, the program code is acquired from the location by using the URL, and is put on the directory developed at step 4103.

To acquire the program code, for example, the protocol of HTTP or the like is used, and any protocol may be used as far as having a similar function (FTP, etc.). When the program code is acquired, the process goes to step 4108.

At step 4108, the program code acquired at step 4107 is registered in the program code database 3901 so as to be reused. In this case, the URL is used as the key of the program code. When the registration is over, the process goes to step 4109.

At step 4109, the program code process section 103 executes the program code. For execution of the program, a new process or thread is assigned, so that it may be possible to process even if the still image processing system may receive a new message during execution of program code. After execution of the program code, the process goes to step 4110.

At step 4110, the still image data issued as a result of execution of program code at step 4109, and the data describing the location of the program code developed at step 4103 are reorganized. The method of reorganizing is same as the archive method of the received message. In this embodiment, since MIME is used in the archive, these two sets of data are reorganized by using MIME. After being reorganized, the process goes to step 4111.

At step 4111, the message reorganized at step 4110 is transmitted to the network terminal demanding the still image data. The destination of transmission is not limited to the network terminal, but may be the same still image data processing apparatus.

Thus, by copying the program code of high frequency of use preliminarily in the program code database 3901, the communication quantity can be decreased.

### Embodiment 11

An eleventh embodiment is explained.

In the eleventh embodiment of the invention, the information processing apparatus is a still image processing apparatus. The system configuration diagram of the still image processing apparatus according to the eleventh embodiment of the invention is same as the configuration of the first embodiment shown in Fig. 1, and the explanation is omitted.

The hardware configuration of the embodiment is same as in Fig. 2 of the first embodiment, and the explanation is omitted.

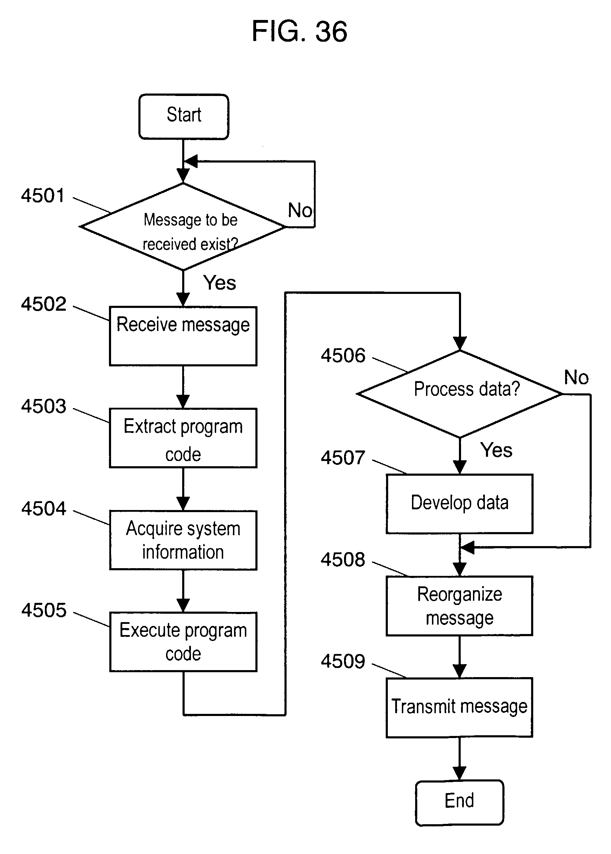

The operation of the still image processing apparatus having such structure is explained below while referring to the flowchart in Fig. 36.

Steps 4501 and 4502 are same as steps 301 and 302 in the first embodiment.

At step 4503, only the program code is extracted from the received message. The received message is composed by using, for example, MIME format archive used in electronic mail. The embodiment is explained by using the MIME format archive, but it is not necessarily limited. In the case of MIME, the received message is expressed in a format as shown in Fig. 6.

In the example in Fig. 6, the still image data (Fuji.png) and program code (AgentCode.class) are archived. The name of this program code is fixed as AgentCode.class, and only the program code is extracted by searching its keyword.

At step 4504 and step 4505, the same process as at step 304 and step 305 in the first embodiment is executed.

At step 4506, it is judged if the program code developed at step 4503 refers to or processes the data included in the message. If referring to or processing the data during execution of program code at step 4505, such data is not developed, and an exception process in the operating system takes place. Depending on whether such exception occurs or not, it is judged whether or not to refer to or process the data. As far as having a similar function, any other method may be employed for judging whether or not to refer to or process the data.

At step 4507, the data is developed. The data is developed by using an existing MIME development method.

At step 4508 and step 4509, the same process as at step 306 and step 307 in the first embodiment is executed. At step 4508, incidentally, the data not developed at step 4507 is not processed for reorganizing, and is used directly.

Thus, since the data in the message is not developed until it is actually used, the data processing time in the still image data processing apparatus can be shortened. That is, depending on the acquired system information, when the program code does not process data, the data developing time can be saved. This is more effective when the data size is larger.

### Embodiment 12

A twelfth embodiment is explained.

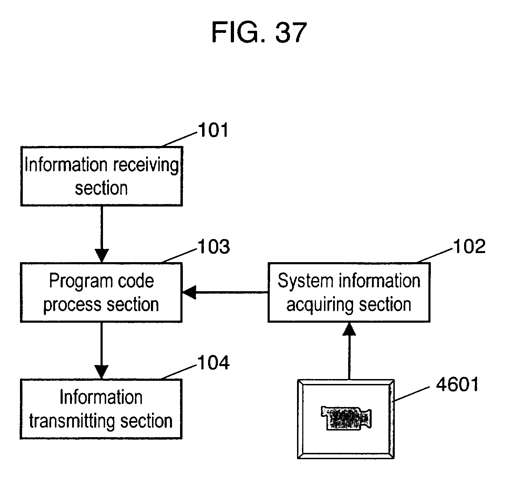

In the twelfth embodiment of the invention, the information processing apparatus is a status observation apparatus. Fig. 37 shows a system configuration diagram of the status observation apparatus according to the twelfth embodiment of the invention. Of the components in Fig. 37, the same parts as in the first embodiment shown in Fig. 1 are identified with same reference numerals, and the explanation is omitted. An observation camera 4601 transfers the images taken at specific intervals to the system information acquiring section 102.

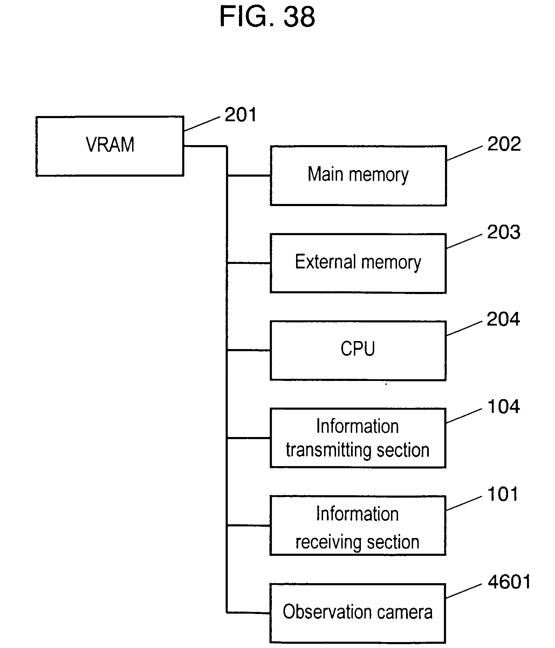

The hardware configuration of the embodiment is shown in Fig. 38, and the parts having the same function as in the system configuration of the first embodiment shown in Fig. 1 and the eleventh embodiment shown in Fig. 37 are identified with same reference numerals as in the drawings, and the explanation is omitted.

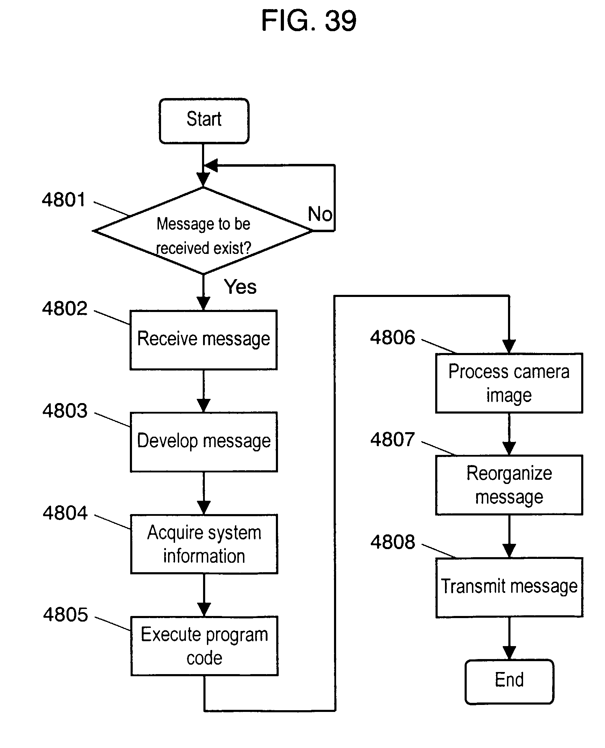

The operation of the status observation apparatus having such structure is explained below while referring to the flowchart in Fig. 39.

Steps 4801 and 4802 are same as steps 301 and 302 in the first embodiment.

At step 4803, the received message is developed into transmission destination data and program code. The message composed of transmission destination data and program code is composed by using, for example, the tar format archive used in UNIX or MIME format archive used in electronic mail.

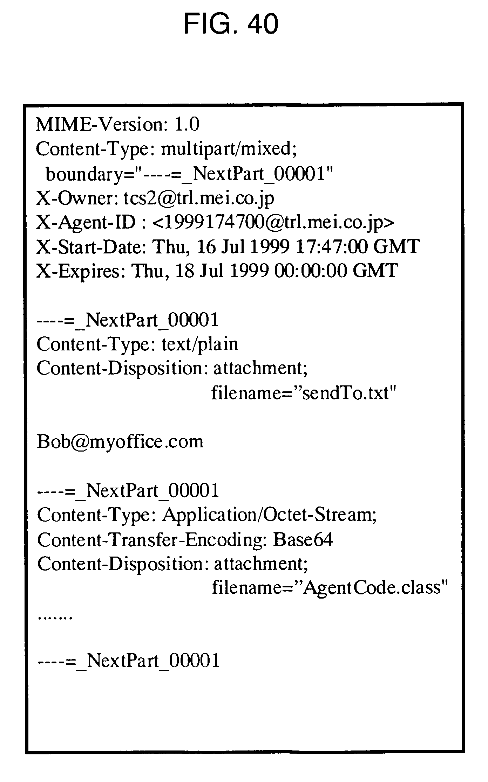

The embodiment is explained by using the MIME format archive, but it is not necessarily limited. In the case of MIME, the received message is expressed in a format as shown in Fig. 40.

In the example in Fig. 40, the transmission destination data (sendTo.txt) and program code (AgentCode.class) are archived.

The developed transmission destination data and program code are saved, for example, in a same directory of the external memory so as to correspond to each other. After the development, the process goes to step 4804.

At step 4804, the system information is acquired. The system information is the operation status of the observation camera connected to this status observation apparatus. To acquire the system information from the program, a library is prepared in the system for acquiring the information, and it is acquired by using Application Programming Interface (API) of the library. When the system information is acquired, the process goes to step 4805.

At step 4805, the program code developed at step 4803 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the status observation system may receive a new message during execution of program code.

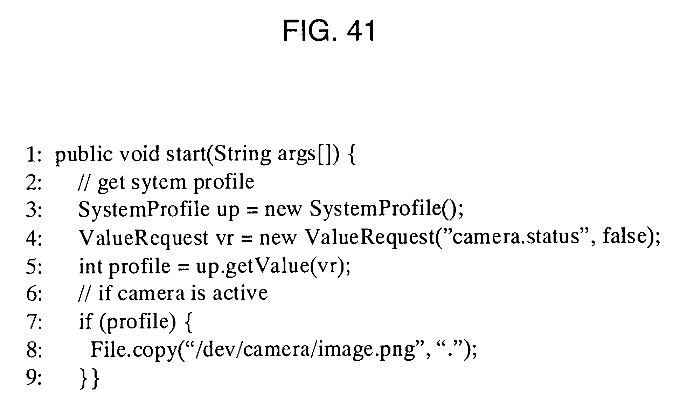

A part of execution program code is shown in Fig. 41.

Fig. 41 shows a development of the program code in the archive by MIME shown in Fig. 6. The language used in the example in Fig. 41 is Java.

Processing of this program code may be explained as follows.

First, the operation status of the observation camera is acquired (lines 3-5).

If the observation camera is operating, its images are acquired (lines 6-8).

In the embodiment, Java is used as the language, but any other language may be used as far as not depending on the execution environment such as Perl or Tcl/Tk.

When execution of program code is finished, the process goes to step 4806.

At step 4806, the camera image acquired at step 4805 is processed. Processing of the camera image is same operation as at step 1506 of the fourth embodiment. That is, by acquiring the terminal display capability information, the camera image is processed depending on the acquired information.

At step 4807, the camera image data processed at step 4806 is reorganized. The method of reorganizing is same as the archive method of the received message. In this embodiment, since MIME is used in the archive, the camera image data is reorganized by using MIME. Herein, the transmission destination data or program contained at the time of reception is not included, and finally it is composed of the processed camera image data only. If necessary, the omitted data may be added herein to compose the data.

At step 4808, the camera image processed at step 4807 is sent to the transmission destination described in the transmission destination data.

Thus, the image is acquired from the camera, and sent to the specified transmission destination.

Herein, the image data is processed and transmitted, but the image data may be also transmitted directly without being processed. Or only the program code may be transmitted. In this case, when the transmission destination is stored in the program instead of being included in the message as the data, it is enough to send the program code only.

### Embodiment 13

A thirteenth embodiment is explained.

In the thirteenth embodiment of the invention, the information processing apparatus is a status observation apparatus. The system configuration diagram of the status observation apparatus according to the thirteenth embodiment of the invention is same as that of the twelfth embodiment shown in Fig. 37, and its explanation is omitted.

The hardware configuration of the embodiment is same as that of the twelfth embodiment shown in Fig. 38, and its explanation is omitted.

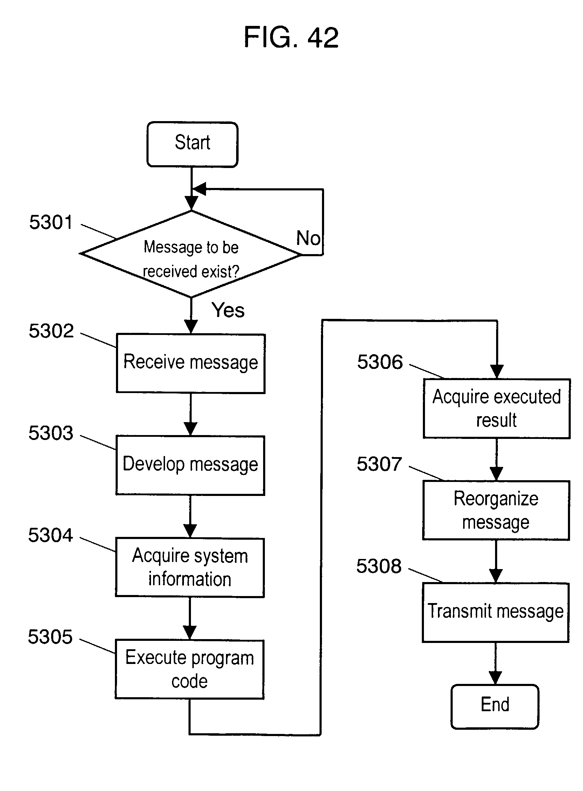

The operation of the status observation apparatus having such structure is explained below while referring to the flowchart in Fig. 42.

Steps 5301 to step 5304 are same as step 4801 to step 4804 in the twelfth embodiment.

At step 5305, the program code developed at step 5303 is executed. Suppose the program to be executed is fixed and identified with its file name. Meanwhile, the program to be executed may not be always identified with its file name, but may be identified, for example, with the header of MIME. For execution of the program, a new process or thread is assigned, so that it may be possible to process even if the status observation system may receive a new message during execution of program code.

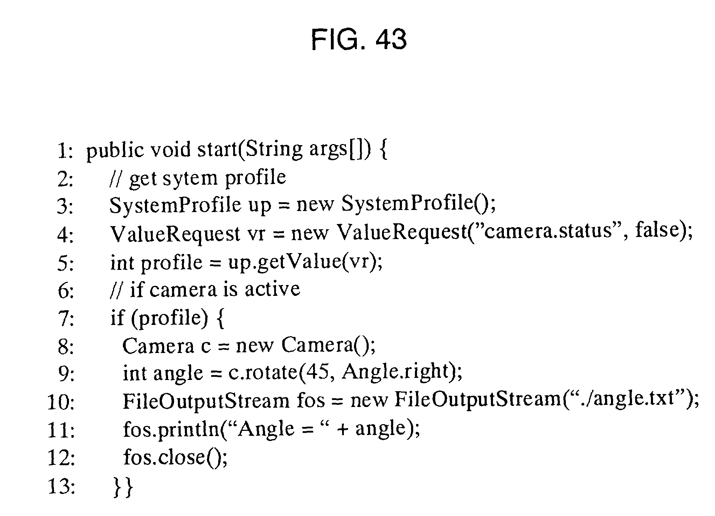

A part of execution program code is shown in Fig. 43.

Fig. 43 shows a development of the program code in the archive by MIME shown in Fig. 6. The language used in the example in Fig. 43 is Java.

Processing of this program code may be explained as follows.

First, the operation status of the observation camera is acquired (lines 3-5).

If the observation camera is operating, the camera angle is changed (lines 7-9).

The change result is acquired, and written out into the file (lines 10-12).

In the embodiment, Java is used as the language, but any other language may be used as far as not depending on the execution environment such as Perl or Tcl/Tk.

When execution of program code is finished, the process goes to step 5306.

At step 5306, the camera angle information acquired at step 5305 is processed. Processing of the camera angle information is same operation as at step 1506 of the fourth embodiment. That is, by acquiring the terminal display capability information, the camera angle information is processed depending on the acquired information.

Herein, the camera angle information refers to the image taken by the camera after moving by the angle specified by the program code.

At step 5307, the camera angle information processed at step 5306 is reorganized. The method of reorganizing is same as the archive method of the received message. In this embodiment, since MIME is used in the archive, the camera angle information is reorganized by using MIME.

At step 5308, the camera angle information processed at step 5307 is sent to the transmission destination described in the transmission destination data.

Thus, the camera angle is changed by remote control, and the result is sent to the specified transmission destination. Herein, the image data is processed and transmitted, but the image data may be also transmitted directly without being processed.

In the foregoing embodiments, the communication paths are not specified, but may include LAN, wireless network, terrestrial wave broadcast, satellite broadcast, CATV, telephone circuit, etc.

Also in the foregoing embodiments, as examples of information processing apparatus, the contents data processing apparatus, still image processing apparatus, status observation apparatus and others are presented. However, the invention is not limited to these devices, and may be applied to all devices capable of transmitting the mobile agents for processing the contents by adding to the contents.

In the foregoing embodiments, the information processing apparatus transmits the processed data. However, it is also possible for the information processing apparatus to use the processed data in its own without transmitting, such as displaying the processed data.

The program used in the embodiments may be supplied as a form of computer program product as explained in embodiment 1. Computer usable recording media include CR-ROM, MO and all other media that can be read into the computer. The program is either directly read in from the computer program product, or read in through the network.

The information processing apparatus is explained in the embodiments, and the objects of the invention may be also achieved by using the methods explained therein.

## Claims

1. An information processing apparatus comprising:
a) information receiving means for receiving a message composed of contents data and a program code for processing the contents data, and separating into the contents data and the program code,
b) system information acquiring means for acquiring system information,
c) program code executing means for processing the contents data depending on the system information acquired by said system information acquiring means, by executing the program code on the contents data, and
d) information transmitting means for reorganizing and transmitting the contents data processed by said program executing means and the program code,
wherein a process of the contents data is judged and executed depending on the information acquired by said system information acquiring means, and the contents data is transmitted as the message including the program code.

2. An information processing method comprising the step of:
a) receiving a message composed of contents data and a program code for processing the contents data, and separating into the contents data and the program code,
b) acquiring system information, and
c) processing the contents data by executing the program code depending on the acquired system information, on the contents data,
wherein the processed contents data and the program code are reorganized and transmitted, and
a process of the contents data is judged and executed depending on the acquired information, and the contents data is transmitted as the message including the program code.

3. A computer program product having a computer readable system code recorded in a computer usable recording medium, said computer program product including:
a) a computer readable system code for receiving a message composed of contents data and a program code for processing the contents data, and separating into the contents data and the program code,
b) a computer readable system code for acquiring system information,
c) a computer readable system code for processing the contents data by executing the program code depending on the system information, on the contents data, and
d) a computer readable system code for reorganizing and transmitting the message composed of the contents data processed by the program code and the program code,
wherein the message composed of the contents data and the program code for processing the contents data is received on the computer connected to the network, and separated into the contents data and the program code, process of the contents data is judged and executed depending on the acquired system information, and the contents data is reorganized and transmitted as the message including the program code.

4. The information processing apparatus of claim 1,
wherein the system information includes a network communication speed, the program code processes the information depending on the network communication speed, and the contents data is processed depending on the network communication speed, thereby decreasing the communication delay.

5. The information processing method of claim 2,
wherein the system information includes a network communication speed to a message transmission destination and, the program code processes the information depending on the network communication speed, and the contents data is processed depending on the network communication speed, thereby decreasing the communication delay.

6. The computer program product of claim 3,
wherein the system information includes a network communication speed to a message transmission destination and network communication speed, the program code processes the information depending on the network communication speed, and the contents data is processed depending on the network communication speed, thereby decreasing the communication delay.

7. The information processing apparatus of claim 1,
wherein the system information includes a load of the CPU for processing, the program code judges whether or not to process the information depending on the CPU load, and the contents data is processed depending on the CPU load, thereby dispersing the load.

8. The information processing method of claim 2,
wherein the system information includes a load of the CPU for processing, the program code judges whether or not to process the information depending on the CPU load, and the contents data is processed depending on the CPU load, thereby dispersing the load.

9. The computer program product of claim 3,
wherein the system information includes a load of the CPU for processing, the program code judges whether or not to process the information depending on the CPU load, and the contents data is processed depending on the CPU load, thereby dispersing the load.

10. The information processing apparatus of claim 1,
wherein the message includes the display capability information of a display device connected to a terminal device for displaying the contents data, and said program code excuting means processes the contents data depending on the display capability information.

11. The information processing method of claim 2,
wherein the message includes the display capability information of a display device connected to a terminal device for displaying the contents data, and the contents data is processed depending on the acquired display capability information.

12. The computer program product of claim 3,
wherein the message includes the display capability information of a display device connected to a terminal device for displaying the contents data, and the contents data is processed depending on the acquired display capability information.

13. The information processing apparatus of claim 1,
wherein the message includes the preference information of the user requesting the contents data, and said program code executing means processes the contents data depending on the preference information.

14. The information processing method of claim 2,
wherein the message includes the preference information of the user requesting the contents data, and the contents data is processed depending on the preference information.

15. The computer program product of claim 3,
wherein the message includes the preference information of the user requesting the contents data, and the contents data is processed depending on the preference information.

16. The information processing apparatus of claim 1, further comprising:
program preprocessing means for preprocessing execution of program code,
wherein the message includes intermediate process information of the program code, and the program preprocessing means acquires the intermediate process information, and successively continues to process the contents data, which is executed at the message transmission destination, by using the intermediate process information.

17. The information processing method of claim 2,
wherein the message includes intermediate process information of the program code, and the intermediate process information is acquired, the program code execution is preprocessed, and processing of the contents data executed at the message transmission origin is continued successively, on the basis of the intermediate process information.

18. The computer program product of claim 3, further comprising:
a computer readable system code for preprocessing execution of program code by acquiring the intermediate process information of the program code included in the message,
wherein processing of the contents data executed at the message transmission origin is continued successively, by using the intermediate process information.

19. The information processing apparatus of claim 1, further comprising:
remote information acquiring means for acquiring the information existing in other apparatus on the network,
wherein at least one of the information included in the message is present in the other apparatus, and the information existing in the other information includes the position information of the other apparatus, said remote information acquiring means acquires the information existing in the other apparatus by using the position information, and only the position information is included in the message, thereby reducing the message size and decreasing the communication delay.

20. The information processing method of claim 2,
wherein at least one of the information included in the message is present in other apparatus on the network, and the information existing in said other apparatus includes the position information of the other apparatus, the information existing in the other apparatus is acquired by using the position information, and only the position information is included in the message, thereby reducing the message size and decreasing the communication delay.

21. The computer program product of claim 3, further comprising:
a computer readable system code for acquiring the information existing in other apparatus on the network,
wherein at least one of the information included in the message is present in other apparatus on the network, and the information existing in said other apparatus includes the position information of the other apparatus, the computer readable system code for acquiring the information existing in the other apparatus on the network acquires the information existing in the other apparatus by using the position information, and only the position information, instead of the information itself, is included in the message, thereby reducing the message size and decreasing the communication delay.

22. The information processing apparatus of claim 1, further comprising:
contents data accumulating means for accumulating the contents data,
contents data retrieval means for retrieving the contents data,
request receiving means for receiving request of contents data, and
program code selecting means for selecting the program code for processing the requested contents data,
wherein by adding the program code for processing the requested contents data to the requested contents data, a message capable of processing the contents in any information processing apparatus on the network is created.

23. The information processing method of claim 2, further comprising the steps of:
i) accumulating the contents data,
ii) receiving transmission request of certain contents data,
iii) retrieving the contents data of which transmission is requested,
iv) selecting the program code for processing the requested contents data, and
v) adding the selected program code to the requested contents data,
whereby creating a message capable of processing the contents in any information processing apparatus on the network.

24. The computer program product of claim 3, further comprising:
i) a computer readable system code for accumulating the contents data,
ii) a computer readable system code for retrieving the requested contents data, and
iii) a computer readable system code for selecting the program code for processing the requested contents data,
wherein by adding the program code for processing the contents data to the requested contents data, a message capable of processing the contents in any information processing apparatus on the network is created.

25. The information processing apparatus of claim 1, further comprising:
user request receiving means for receiving user's request,
user request transmitting means for sending the user's request, and
display means for displaying contents data,
wherein the contents data included in the received message corresponding to the user's request is displayed.

26. The information processing method of claim 2, further comprising the steps of:
receiving user's request,
sending the user's request, and
receiving the message received corresponding to the user's request, and displaying contents data included in the received message.

27. The computer program product of claim 3, further comprising:
a computer readable system code for receiving user's request,
a computer readable system code for sending the user's request, and
a computer readable system code for displaying contents data,
wherein the contents data included in the message received corresponding to the user's request is processed and displayed.

28. The information processing apparatus of claim 1, further comprising:
accumulating means for accumulating program codes, and
program code retrieval means for retrieving the program codes,
wherein said accumulating means preliminarily holds copies of program codes of high frequency of use, so that the communication quantity is decreased.

29. The information processing method of claim 2, further comprising the steps of:
accumulating program codes, and
retrieving the program codes,
wherein copies of program codes of high frequency of use are preliminarily held, so that the communication quantity is decreased.

30. The computer program product of claim 3, further comprising:
a computer readable system code for accumulating program codes, and
a computer readable system code for retrieving the program codes,
wherein copies of program codes of high frequency of use are preliminarily held, so that the communication quantity is decreased.

31. The information processing apparatus of claim 1,
wherein said information receiving means first separates the program code from the message, then separates the contents data.

32. The information processing method of claim 2,
wherein when separating the message, first the program code is separated, then the contents data is separated.

33. The computer program product of claim 3,
wherein the system code for separating the contents data and program code first separates the program code from the message, then separates the contents data.

34. The information processing apparatus of claim 1,
wherein said information transmitting means reorganizes and transmits at least one of the data acquired from said system information acquiring means, the contents data processed by said program code executing means, and the program code.

35. The information processing method of claim 2,
wherein the transmission data includes the data reorganized at least one of i) the data acquired at step b), ii) the processed contents data, and iii) the program code.

36. The computer program product of claim 3,
wherein the computer readable system code for transmitting the message reorganizes and transmits at least one of i) the data acquired by the system code for acquiring the system information, ii) the contents data processed by the system code for executing the program code, and iii) the program code.

37. The information processing apparatus of claim 1,
wherein said information transmitting means reorganizes and transmits at least one of i) the data acquired by execution of the program code, ii) the processed contents data, and iii) the program code.

38. The information processing method of claim 2,
wherein the transmission data includes at least one of i) the data acquired by execution of the program code, ii) the processed contents data, and iii) the program code.

39. The computer program product of claim 3,
wherein the computer readable system code for transmitting the message reorganizes and transmits at least one of i) the data acquired by execution of the program code, ii) the contents data processed by the program means, and iii) the program code.

40. An information processing apparatus comprising:
a) information receiving means for receiving a message composed of contents data and program code for processing the contents data, and separating into the contents data and program code,
b) system information acquiring means for acquiring system information, and
c) program code executing means for processing the contents data depending on the system information acquired by said system information acquiring means, by executing the program code on the contents data,
wherein a process of the contents data is judged and executed depending on the information acquired by said system information acquiring means.

41. An information processing method comprising the step of:
a) receiving a message composed of contents data and program code for processing the contents data, and separating into the contents data and program code,
b) acquiring system information, and
c) processing the contents data by executing the program code depending on the acquired system information, on the contents data,
wherein a process of the contents data is judged and executed depending on the acquired information.

42. A computer program product having a computer readable system code recorded in a computer usable recording medium, said computer program product including:
a) a computer readable system code for receiving a message composed of contents data and program code for processing the contents data, and separating into the contents data and program code,
b) a computer readable system code for acquiring system information, and
c) a computer readable system code for processing the contents data by executing the program code depending on the system information, on the contents data,
wherein a process of the contents data is judged and executed depending on the acquired system information.
